Europäisches Patentamt

European Patent Office

Office européen des brevets

(11) Publication number: **0 445 797 A2**

# EUROPEAN PATENT APPLICATION

(21) Application number: **91103463.5**

(22) Date of filing: **07.03.91**

(51) Int. Cl.5: **G06F 7/60**

(30) Priority: **09.03.90 US 491343**

(43) Date of publication of application:
**11.09.91 Bulletin 91/37**

(84) Designated Contracting States:
**BE DE DK ES FR GB IT NL SE**

(71) Applicant: **TOGAI INFRALOGIC, INC.**
**30 Corporate Park, Suite 107**
**Irvine, CA 92714(CA)**

(72) Inventor: **Corder, Rodney J.**
**10261 Kukui Drive**
**Huntington Beach, CA 92646(CA)**
Inventor: **Miller, Mark E.**
**23281 Via Bahia**
**Mission Viejo, CA 92691(CA)**

(74) Representative: **Dreiss, Hosenthien &**
**Fuhlendorf**
**Gerokstrasse 6**
**W-7000 Stuttgart 1(DE)**

(54) **Fuzzy logic computer.**

(57) A RISC computer is specially adapted in its hardware and operating procedures for operating systems based upon sets of logical statements utilizing fuzzy logic procedures. The computer may operate either stand-alone or embedded in a host computer, and supplies system control signals derived from measurements of system operating conditions and operating knowledge expressed in fuzzy logic form. A core processor of the computer performs logical evaluations and mathematical manipulations, and performs other control and memory management functions. A key feature of the logical evaluation hardware approach is the evaluation of logical conclusions by their areas and moments determined prior to program execution, permitting much faster computation of command signals than previously possible. Communication to the controlled system or a host computer is through an arbiter that manages the data flow in conjunction with a data memory.

EP 0 445 797 A2

## BACKGROUND OF THE INVENTION

This invention relates to the structure and operation of computers, and, more particularly, to a computer specially adapted for performing control functions based upon fuzzy logic.

Conventional computers include an instruction processor that performs arithmetic or logic operations responsive to well-defined instructions. For example, a processor may respond to the instruction "ADD" by performing an arithmetic addition of two numbers provided from memory or registers. An "AND" instruction causes the processor to logically combine two expressions provided as arguments. This type of computer works well for well-defined instructions and logic.

In recent years specialized computers have been developed as "expert systems" that approximate, in greater or lesser degree, the approach utilized by human beings in solving problems. The philosophy behind an expert system is that the knowledge of one or more human experts on a subject--cooking, diagnosing patients, or running a chemical plant, for example--could be programmed into the computer so that the computer could use this information to mimic the behavior of the human being in performing the particular expert function. Since the computer operates rapidly and indefinitely, and does not become fatigued or prone to error in the same manner as the human being, the computer could effectively replace the human being in some highly repetitive tasks. Expert systems and related types of artificial intelligence underlie many recent advances in robotics and control systems.

There are significant limits to the ability of the conventional logical structure built into computers to mimic many aspects of human and control behavior, particularly for very complex problems. If, for example, an expert chemical engineer describes how he operates a chemical plant, there will typically be few absolute statements, mathematical equations, and Boolean logical expressions. More typically, the expert will refer to indefinite quantities such as a "high" temperature, a "low" pressure, or the like. The engineer may describe his procedures as monitoring the plant operating conditions, and then changing a control parameter such as current to a heater to a low value if the temperature becomes too high and the pressure becomes too low.

If the computer scientist then attempts to express these concepts in a form suitable for a conventional computer, there can be biases imposed by the requirements of the computer and the translation of the expert statements into a form suitable for use by the computer. One result of this situation has been the development of a methodology called "fuzzy logic", which provides an analytical approach for quantifying inexact concepts in a way that can be operated upon by a computer.

The fuzzy logic approach will be discussed in more detail subsequently. Briefly, however, it provides for the expression of the essentially qualitative concepts often used by human beings, such as "low" or "high", in the form of a "membership" (also called "degree of belief") function. The term "fuzzy logic" therefore derives from the fact that it is used to model the types of imprecisely defined situations often encountered in everyday life, and not from any imprecision in the analytical approach. Once defined, the membership functions are used in the antecedent or premises side of logical statements that express the approach of the human expert in providing control guidance or solving problems, and produce conclusions also in the form of membership functions.

Fuzzy logic procedures thus provide an alternate approach to the mathematical model analysis of control situations, an approach that is particularly useful if at least some portion of the system control is based upon expert knowledge. Fuzzy logic control has been applied in a number of situations, such as the control of a subway, an air conditioning system, and a camera focusing system.

The problems to which fuzzy logic has been applied to date have been, for the most part, rather nondemanding control situations. The logical requirements for the operation of the systems just mentioned involve only a few relatively simple logic statements. The control variations are not made at a high repetition rate. Existing methods for manipulating the logical statements of fuzzy logic with conventional oomputer systems are sufficient.

As expert systems utilizing fuzzy logic become more widely accepted, they are being applied in situations where the number and complexity of the fuzzy logical statements become large and control feedback times for real-time operation are short. For example, to control a robotic device such as a robot arm by a fuzzy logic approach, there may be well over one hundred complex logical statements each involving numerous membership functions. All of the necessary data parameters must be read and incorporated into the membership functions, the logical statements evaluated, and a crisp command signal defined in each control cycle. For some robotic devices to operate in a manner that mimics human behavior, the control cycles must occur every 2-5 milliseconds. Existing microcomputers simply are not fast enough to handle such large, complex problems at the speed required for these control functions.

Many applications for which fuzzy logical techniques could be applied already utilize computer controllers. The incorporation of fuzzy logic into these applications is hampered in some cases by the need to make major modifications to the control microprocessor and/or software in order to incorporate fuzzy logic. The adoption of fuzzy logic control philosophy in these situations would be accelerated if there were available an integral embedded unit which could operate in conjunction with the existing host computer to perform the fuzzy logic analysis and control functions without the need to modify the host computer.

There exists a need for an improved approach to the utilization of fuzzy logic in complex control applications, particularly where an existing computer is already utilized. This approach would desirably permit the fuzzy logic operations to be accomplished without interfering with the operation of the host computer, would be useful in complex situations, and would not be too large or heavy. The present invention fulfills this need, and provides other related advantages.

## SUMMARY OF THE INVENTION

The present invention provides a fuzzy logic computer and operational procedures that perform system control operations faster than possible with prior computers. In one example, the computer of the invention is implemented on a single board in less than 10 square inches of space, making it well suited for embedded operation with a host microcomputer. With the computer of the invention, the advantages of fuzzy logic-based control can be enjoyed in systems where that has heretofore not been possible due to speed limitations or practical due to complexity limitations in dealing with a system already under computer control.

In accordance with the invention, a computer comprises a programmable digital microprocessor; and a dedicated fuzzy logic instruction set. In this context, the use of the term "programmable" distinguishes the computer of the invention from hardwired devices that can execute only those functions that are hard wired into place. The use of the term "digital" distinguishes the computer of the invention from devices based upon the manipulation of signals with analog techniques. The dedicated fuzzy logic instruction set includes instructions which process only fuzzy logic expressions, and also may include conventional arithmetic and logical instructions.

Further in accordance with the invention, a method for performing fuzzy logic control of a system comprises the steps of furnishing a computer; providing to the computer a set of logical statements, membership functions for the antecedents of the logical statements, and membership functions for the conclusions of the logical statements, the antecedent membership functions being expressed as degrees of belief of a measurable system parameter and the conclusion membership functions being represented as the moment and area of a membership function for a controllable system parameter; measuring a set of measured system parameters; evaluating each logical statement by determining the conjugate value of the antecedent membership functions of the logical statement, and multiplying the area of the conclusion membership function by the conjugate value to obtain a weighted area, and multiplying the moment of the conclusion membership function by the conjugate value to obtain a weighted moment; combining the conclusions of the logical statements to form a control signal by dividing the sum of the weighted moments for all logical statements by the sum of the weighted areas for all logical statements; and providing the control signal to the controllable system function.

In accordance with another aspect of the invention, a process for performing fuzzy logic control of a system comprises the steps of providing a system which is capable of control by a centroid value of a mathematical summation of weighted conclusion membership functions of at least two logical statements; furnishing a computer; providing to the computer a set of logical statements, membership functions for the antecedents of the logical statements, and membership functions for the conclusions of the logical statements; measuring a set of measured system parameters; evaluating each logical statement; combining the conclusions of the logical statements responsive to the centroid of the sum of the conclusion membership functions to form a control signal; and providing the control signal to the controllable system.

The computer and method of the invention are specially adapted to performance of control functions involving information expressed in the fuzzy logic format. Extraneous overhead is eliminated in favor of the narrow specialization inherent in this approach. The resulting computer has high speed and small size, with a large capability for rapidly performing complex logical statements involving antecedents and conclusions expressed in fuzzy logic terms. The computer is also specially adapted for interfacing with various types of host computers. The computer of the invention may therefore act on a stand-alone basis or as an embedded computer in conjunction with a host computer. In the latter approach, the host computer provides the primary system monitoring and control function, while the embedded fuzzy logic computer rapidly evaluates the logic required in the control operation and provides command signals either directly to the controlled system or to the host computer for relay to the controlled system.

Other features and advantages of the present invention will be apparent from the following more detailed description of the preferred embodiment, taken in conjunction with the accompanying drawings, which illustrate, by way of example, the principles of the invention.

BRIEF DESCRIPTION OF THE DRAWINGS

Figure 1 is a diagrammatic illustration of a logical statement implemented with membership functions;

Figure 2 is an information flow diagram for the determining of a weighting factor used in the evaluation of a logical statement;

Figure 3 is an information flow diagram for the evaluation of a logical statement;

Figure 4 is a top-level computer system block diagram;

Figure 5 is a detail block diagram of the control unit;

Figure 6 is a detail block diagram of the execution control unit;

Figure 7 is a detail block diagram of the execution unit;

Figure 8 is a detail block diagram of the arbiter;

Figure 9 is a detail block diagram of the address calculation unit;

Figure 10 is a state diagram of the FZAND instruction;

Figure 11 is a state diagram of the FZOR instruction;

Figure 12 is a state diagram of the RHSC/RHSH instructions;

Figure 13 is a state diagram of the first nine states of the LHS instruction;

Figure 14 is a state diagram of the last nine states of the LHS instruction; and

Figure 15 is a state diagram of the DFUZ instruction.

DETAILED DESCRIPTION OF THE PREFERRED EMBODIMENTS

In accordance with a preferred embodiment of the invention, a method of performing fuzzy logic control of a system comprises the steps of furnishing a computer; loading into the computer a set of membership functions, each membership function being a functional relation between a degree of belief $f(p_i)$ and a physical parameter $p_i$ of a system; loading into the computer a set of j logical statements having the physical parameters as antecedents and producing a conclusion; determining as a preliminary operation the moment and area of each conclusion membership function, the moment M of each membership function being the sum over all $p_i$ of the product $p_i \times f(p_i) \times dp_i$, and the area A being the sum over all $p_i$ of the product $f(p_i) \times dp_i$, where $dp_i$ is the difference between succeeding

values of $p_i$; measuring a set of $P_{im}$ values, the step of measuring being accomplished after completion of the step of determining the moment and area; evaluating each of the logical statements for the measured $P_{im}$ values and their respective membership functions, the step of evaluating including the sub steps of determining a conjugate value of the antecedent membership functions of the logical statement, calculating a weighted moment of the conclusion membership function as the conjugate value of the antecedent membership functions times the preliminarily computed moment of the conclusion membership function, and calculating a weighted area of the conclusion membership function as the conjugate value of the antecedent membership function times the preliminarily computed area of the conclusion membership function; combining the conclusions of the j logical statements by adding together the weighted areas for each conclusion membership function to form a total weighted area, and adding together the weighted moments for each conclusion membership function to form a total weighted moment; forming a crisp output for all the logical statements by dividing the total weighted moments by the total weighted areas; and providing the crisp output to the system as a control parameter.

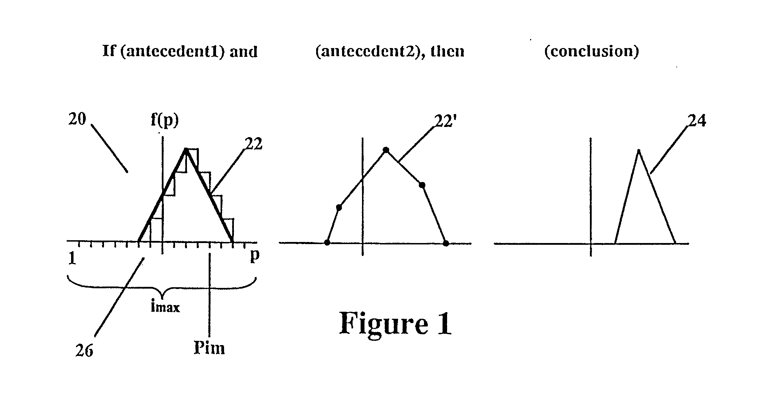

A fuzzy logic controller permits the rapid evaluation of large numbers of logical statements whose antecedents are expressed in the form of membership functions. By way of illustration, Figure 1 depicts a logical statement of the form "If (antecedent 1) and (antecedent 2), then (conclusion)". As an example, this general form of logical statement could represent a statement of the following form used in the control of a system or machine: "If (measured pressure is low) and (measured temperature is low), then (controllable flow rate parameter should be high)." These logical forms are exemplary, as the fuzzy logic controller of the invention can handle any type or variety of logical statement involving "and" connectives, "or" connectives, "not" limitations, and so forth, and with few or many antecedents and few or many conclusions. In a normal complex system, there may be as many as 100 or more logical statements that must be co-evaluated in reaching a conclusion.

Figure 1 also illustrates the introduction of information in the form of membership functions, also known as degree of belief functions, into the logical statements. The antecedent "pressure is low" reflects the notion of a "low" value without an exact definition of what "low" means. The definition of "low" can be introduced with a membership function 20, three examples of which are depicted in Figure 1. The membership function 20 illustrates a functional relation between a degree of belief of an occurrence $f(p)$ as related to a measurable system parameter p. The construction of membership functions and their use in two practical situations are found in US Patents 4,841,815 and 4,842,342, whose disclosures are incorporated by reference. The present invention does not deal with the construction of the membership functions, but instead with their use. Briefly, membership functions are often determined by reference to human or system operating experience gathered under a variety of operating conditions. That experience is then quantified in the membership function 20. One of the illustrated membership functions is triangular in shape and the other is piecewise linear in form, but they may be generally of any functional form.

The membership functions of Figure 1 are of two types. There are two antecedent membership functions 22 and 22' expressing the degree of belief $f(p)$ of an event as a function of the measurable system parameter p, and there is one conclusion membership function 24 expressing the degree of belief of a particular logical conclusion as a function of the setting of a controllable parameter.

The membership function 22 of Figure 1 is illustrated in a digitized form that is common for a digital computer environment. The values of the measurable parameter p are digitized in a plurality $i_{max}$ of increments i, as illustrated at numeral 26. When the parameter is actually measured on a system, it is digitized for storage in the computer. The corresponding values of $f(p)$ are also in digital form, so that the membership function 22 is in fact not smooth but contains narrowly spaced steps. With this structure, the membership function 22 can be readily stored in the memory of the computer as a table.

Another approach, a piecewise linear format, is illustrated for the membership function 22'. Here, the membership function is expressed as a series of linear segments with known end points. Any intermediate value is determined by interpolation between the end points of the appropriate region. The stepwise approach of the membership function 22 permits faster evaluation of degrees of belief than the piecewise linear approach of the membership function 22', while the piecewise linear approach utilizes less memory storage space. The selection of the mode of expression of the membership function will therefore depend upon whether reaching a result rapidly or minimizing storage space is the more significant system requirement. In the presently preferred embodiments, speed is more important than storage space limitations. The most preferred approach to retaining the membership functions is the stepwise approach, numeral 22.

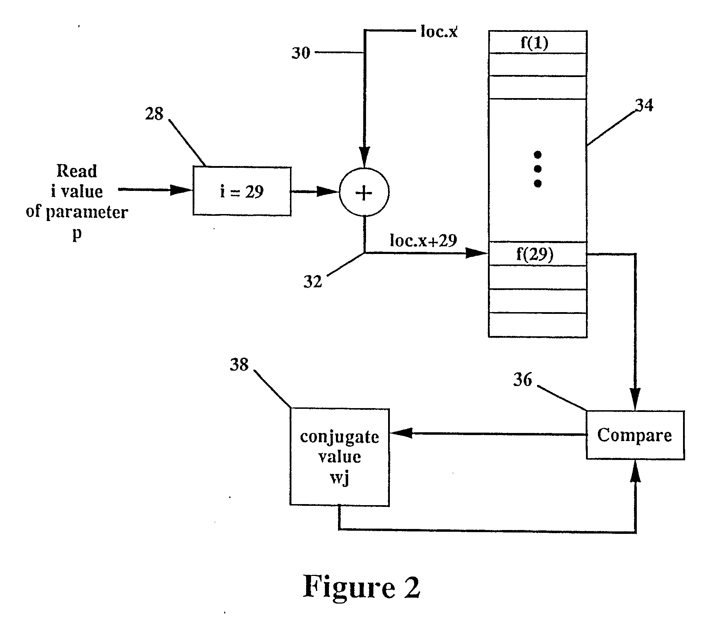

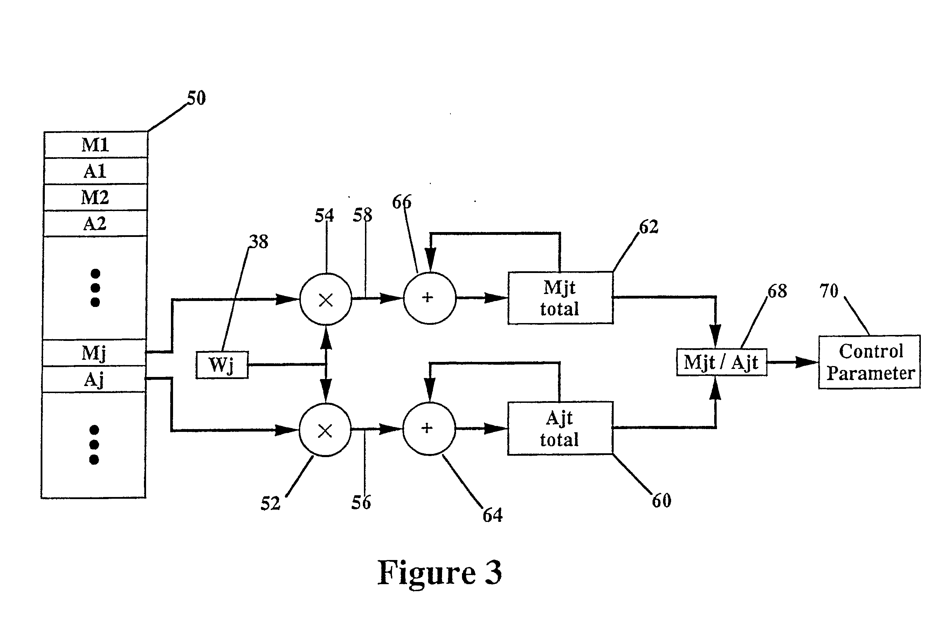

The evaluation of the logical statement involves two steps, the evaluation of the left-hand side of the logical expression (the antecedents) and the evaluation of the right-hand side (the conclusion) subsequently, using in part information from the evaluation of the left-hand side. Figure 2 illustrates the preferred approach for evaluating the left-hand side membership functions, and Figure 3 illustrates the remainder of the evaluation of the j logical statements individually and as a group. In the approach of the invention, the conjugate value of the antecedent membership functions is provided in order to evaluate the right-hand side conclusions.

The value of a measurable system parameter is read by appropriate sensors as data, numeral 28. Using the preferred stepwise storage format, the data value is read in a digitized form as the number of the increment i corresponding to the measurement m. Thus, for example, for the sake of definiteness of illustration the value of i is assumed to be "29", meaning that the value of i is the twenty-ninth increment i from the lowest value of the range of measurement of the sensor. Figure 1 illustrates schematically the location of $p_{im}$, the increment of $p_i$ in which the measured value of $f(p_i)$ is found. The location in memory of the lowest value of p in the appropriate membership function, denoted as x, is fetched, numeral 30, and added to the digital data value of i, here 29, to produce a sum, numeral 32, which is the address of the value of the degree of belief function $f(p)$ in a table 34 containing the membership function.

The value of the degree of belief function at this memory location is fetched and used in evaluating the conjugate degree of belief of the membership functions on the left-hand side of the logical statement. The "conjugate" degree of belief for the jth logical statement under evaluation, termed $w_j$ for reasons that will become apparent, is determined according to the logical combination of the antecedent membership functions of the jth logical statement, in a manner well known in fuzzy logic theory. Thus, for the preferred approach, if two antecedents are connected by a logical "AND", the conjugate degree of belief is the minimum or lesser of the two degrees of belief for the two membership functions evaluated at their measured data values. The conjugate degree of belief is determined by comparing, numeral 36, the degree of belief for each membership function with the current running value of the minimum degree of belief for the membership functions already determined in the left-hand side of that logical statement. The running value is preferably stored in a register 38. Similarly, if two antecedents are connected by a logical "OR", the conjugate degree of belief is the maximum or greater of the two degrees of belief for the two membership functions evaluated at their measured data values. The conjugate degree of belief is determined by comparing, numeral 36, the degree of belief for each membership function with the

the current running value of the maximum degree of belief for the membership functions already determined in the left-hand side of that logical statement. The running value is stored in register 38. As each logical statement is evaluated, its conjugate degree of belief is retained as the result of the evaluation of the left-hand side (antecedents) of the logical statement. Each of the j logical statements is evaluated in a similar manner, except that its respective table 34 and read data value 28 are used.

The right-hand side of each logical statement is also evaluated in a novel manner. Before any data is taken, and normally at the time of compiling the program software, the moment and area of the membership function 24 for the conclusion or right-hand side are calculated. The moment $M_j$ for the jth logical statement is calculated arithmetically as $f(p_i) \times p_i \times dp_i$, and the area $A_i$ is calculated arithmetically as $f(p_i) \times dp_i$, where $dp_i$ is the width of each increment i of the conclusion membership function. These calculations are performed for each conclusion membership function of the j logical statements, and only need be performed for each conclusion membership function once. The computed values of the moments $M_i$ and areas $A_i$ are stored in a table 50, see Figure 3.

When the controller system is actually running (and execution time is at a premium), the appropriate precalculated values of $A_j$ and $M_j$ are recalled from the table 50 in the evaluation of the jth rule logical statement, and multiplied by the conjugate degree of belief $w_j$ from the left-hand side, computations 52 and 54 respectively, to form a "weighted" moment and "weighted" area for each logical statement, numerals 56 and 58. The conjugate degree of belief value for each logical statement thus becomes a weighting factor for the moment and area of its corresponding conclusion membership function.

To evaluate the entire group of j logical statements requires only simple arithmetic computations under the approach of the invention. A running total of each of $A_{jt}$ and $M_{jt}$ (a total t over the j logical statements) is maintained in registers 60 and 62, respectively. As each succeeding logical statement is evaluated to produce weighted values of $A_j$ and $M_j$, numerals 56 and 58 respectively, it is added, numerals 64 and 66 respectively, to the running value recalled from the registers 60 and 62. The respective sums are stored in registers 60 and 62, respectively.

The crisp value resulting from "defuzzifying" the logical statement is obtained by dividing the total $M_{jt}$ by the total $A_{jt}$, numeral 68, and is output to the system as the control parameter 70.

The significance of the present approach is that it can evaluate complex arrays of logical statements incorporating fuzzy logic membership functions several times faster than any other known approach and with less required memory, for typically encountered types of logical arrays. In prior techniques, the conclusion membership functions are stored as lists that include the entire range of the degree of belief as a function of the controlled parameter. The combination of the several logical statements requires a complex computation of the centroid of the combined clipped membership functions, a time-consuming operation. In the present approach, the computation requires only moment and area information for each conclusion membership function, and is faster and more accurate than the prior approach.

The combination of the left-hand side and right-hand side computational approaches is considerably faster in evaluating the fuzzy logic statements than is a conventional computer and processing. The number of machine cycles to evaluate a set of logical statements is determined to be $(6 + 3P + 10C)R + 10C$ for the present approach, where P is the number of antecedents in each logical statement, C is the number of conclusions, and R is the number of logical statements being evaluated as a group. By contrast, the number of machine cycles for a conventional approach, an 80386 processor, is $(2 + 16P + 52C)R + 38C$. For another conventional approach, a 29000 processor, the corresponding value is $(1 + 10P + 18C) + 34C$.

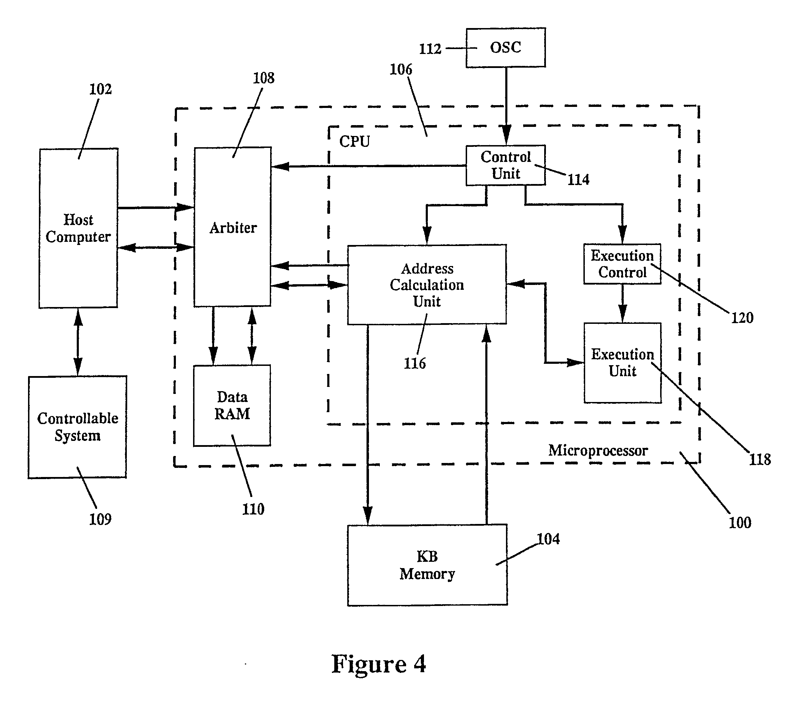

The logical approach just described is implemented in a microprocessor 100 that processes the logical operations, controls the input/output and memory functions, and interfaces with a host computer 102 and a knowledge base memory 104 as illustrated in Figure 4. The microprocessor 100 includes a CPU (central processing unit) 106 that is interfaced to the host computer 102 and a data RAM (random access memory) 110 through an arbiter 108 that controls the flow of information. These microprocessor functions are contained on a single chip. An oscillator 112 provides timing information for the microprocessor. The structure and operation of these components will be described in greater detail in the following paragraphs.

The host computer 102 provides an enable signal, read/write control, address information and data to the arbiter 108. Using protocols dictated by the host operating modes provided to the arbiter 108 by the CPU 106, the arbiter 108 services the requests of the host computer 102. The provision of such information from a host computer is well known in the art. The host computer 102 may include any conventional microprocessor such as an Intel 80286, a Motorola 68000, or an Intel 8051, but the invention is not limited to use with any particular host computer 102.

The host computer 102 may provide direct access to its peripherals for the microprocessor 100, in order that the microprocessor 100 may directly make measurements and apply control functions to an external controllable system 109. The controllable system 109 serves as the source of measurable readings of system performance, such as temperatures, pressures, movements, etc. Control signals are sent to the controllable system, such as commands to motors, commands to heaters, etc. The controllable system can be of any type that meets the control requirements as stated elsewhere herein. Examples of controllable systems include chemical plants, automobile transmissions, robots, etc. These examples are by way of illustration and not limitation.

The CPU 106 provides address information to the knowledge base memory 104 which in turn provides the logical statements, membership function data, and the general instructions and constant data required for the operation of the system. The knowledge base memory 104 is preferably a conventional EPROM such as an AMD 27C1024.

The CPU 106 is provided clock and timing information by a conventional crystal oscillator 112, such as a Connor-Winfield HC15R8 HCMOS oscillator operating at 20.0 MHz (megahertz). It also provides host operating modes, enable, read/write control, address information and data to the arbiter 108 for requests to the data RAM 110.

The data RAM 110 was created using silicon compiler techniques using the VLSI Technology CRAM02 cell compiler from the VCC100 Compiler Library. The data RAM is 256 words deep, with each word having 8 bits. It requires control from the arbiter 108 in the form of an enable, a read/write control signal, address information and data for write operations. The data RAM 110 provides to the arbiter 108 the data output for read operations. The data RAM 110 was compiled to have separate data input and data output busses.

The arbiter 108 accepts requests for access to the data RAM 110 from both the host computer 102 and the CPU 106. These requests for access are provided by the respective functional blocks by enable signals, read/write control address information and data. The arbiter 108 services the requests in the order that they are asserted by the host computer 102 and the CPU 106. In the event that both requests are asserted simultaneously, the arbiter 108 services the CPU 106 first in order to speed processing. The arbiter 108 provides the clock and enable signals, read/write controls, address information and data to the data RAM 110 in order to store the data or retrieve the data as requested by the host computer 102 and the CPU 106.

In addition to servicing simple requests for access to information in the data RAM 110 by the CPU 106, the arbiter 108 also provides the ability for the CPU 106 to directly access peripheral devices provided by the host computer 102. When the CPU 106 makes a request of the arbiter in a predetermined address range, the arbiter converts that physical address to a virtual address which can be used by the host computer 102 to access its peripheral devices. When the arbiter 108 attempts to access the peripheral devices, it provides control signals substantially identical to those of Intel 8051 microcomputers.

The CPU 106 provides the host operating mode control to the arbiter 108 to determine which commonly used method of enable, read/write control, address information, and data will be provided by the host computer 102. The arbiter 108 is able to receive requests from the host computer 102 using the read/write control methods commonly used by Intel (separate read enable and write enable signals) or by Motorola (an enable signal and a read/write signal). In addition, the address information may be separate from the data as is typical of Motorola processors, or the address information may share the same signal pins as the data as is typical of Intel processors. If the address information and data share the same signals, a separate address strobe is provided in order to determine when the address information is on the bus and when the data information is on the bus. The arbiter 108 is also required to signal back to the host computer 102 that valid data is available in the case of a read request, or the data has been accepted in the case of a write request. This is controlled by a data status signal whose interpretation is defined by the host operating mode. The data status signal is used to signal to the host computer 102 to wait until the arbiter 108 is able to process the request, after the RDY signalling used by Intel processors, or is used to signal to the host computer 102 that the arbiter 108 has processed the request, after the DTACK signalling used by Motorola processors. These host operating modes may be combined in order to directly interface the the microprocessor 100 to many different types of host computer 102 without the need for extraneous interface circuitry.

The arbiter 108 also provides a simple communication facility between the host computer 102 and the CPU 106. This communication facility is the same as is commonly provided by standard dual-port memory devices such as the IDT 7130 dual-port RAM. When the host computer 102 writes to the Input Communication Register (ICR, address 00) the arbiter 108 activates a signal to the CPU 106 to indicate that a new message has arrived for the CPU 106. When the CPU 106 reads the ICR, that same signal is inactivated. Similarly, if the CPU 106 writes to the Output Communication Register (OCR, address 01), an interrupt signal is activated by the arbiter 108 to instruct the host computer 102 that a new message has arrived for the host computer 102. When the host computer 102 reads the OCR the interrupt signal is inactivated. This scheme provides a simple mechanism for passing messages between the host computer 102 and the CPU 106 without having to define the meanings for any messages.

The CPU 106 includes a control unit 114, an address calculation unit 116, an execution unit 118, and an execution control unit 120. It performs all of the logical and arithmetic processes necessary for evaluation of the logical statements and general instructions provided by the knowledge base memory 104.

The control unit 114 provides host operating mode information to the arbiter 108 for use in determining how to interpret the enable, read/write control, address information, and data received from the host computer 102. The control unit also provides the enable, read/write control, and timing signals required by the arbiter 108 to facilitate the processing of requests from the data RAM 110 or peripherals of the host computer 102. It also receives information as to the status of its requests to the arbiter 108 and the status of incoming messages from the host computer 102. The control unit 114 receives logical statements and general instructions from the knowledge base memory 104. The control unit 114 provides the control signals such as the register enables and selector controls necessary for the address calculation unit 116 to operate. The control unit 114 also receives status information from the address calculation unit 116 for indexing operations. The control unit 114 provides the control signals such as register addresses, selector controls, operation bit-width and register enables necessary for the execution control unit 120 to operate the execution unit to perform the logical and arithmetic functions. The execution control unit 120 provides to the control unit 114 the proper carry-out and zero signals required by the status flags.

The address calculation unit 116 receives control signals from the control unit 114. These control signals enable the various registers, functions, and selectors located in the address calculation unit 116. The address calculation unit 116 provides address information and data to the arbiter 108 for requests initiated by the control unit 114. It also provides address information and receives instructions and data from the knowledge base memory 104. The address calculation unit 116 provides data transfer between the arbiter 108 and the execution unit 118, and between the knowledge base memory 104 and the execution unit 118 as well as some primitive byte manipulation capabilities.

The execution unit 118 receives control signals for operating the various registers, selectors, and functions located in the execution unit 118 from the execution control unit 120 which were decoded from signals provided by the control unit 114. It receives data from the address calculation unit 116, processes it under control from the execution control unit, and provides the processed data back to the address calculation unit 116 for storage by the arbiter 108 in either the data RAM 110 or for output to peripheral devices in the host computer 102.

The execution control unit 120 takes encoded control signals from the control unit 114 and decodes them into a format suitable for controlling the various registers, selectors, and functions of the execution unit 118. It also takes carry-out and zero detection information from the execution unit 118 and, using control signals provided by the control unit 114, provides the control unit the proper carry-out and zero detection signals required for the status flags.

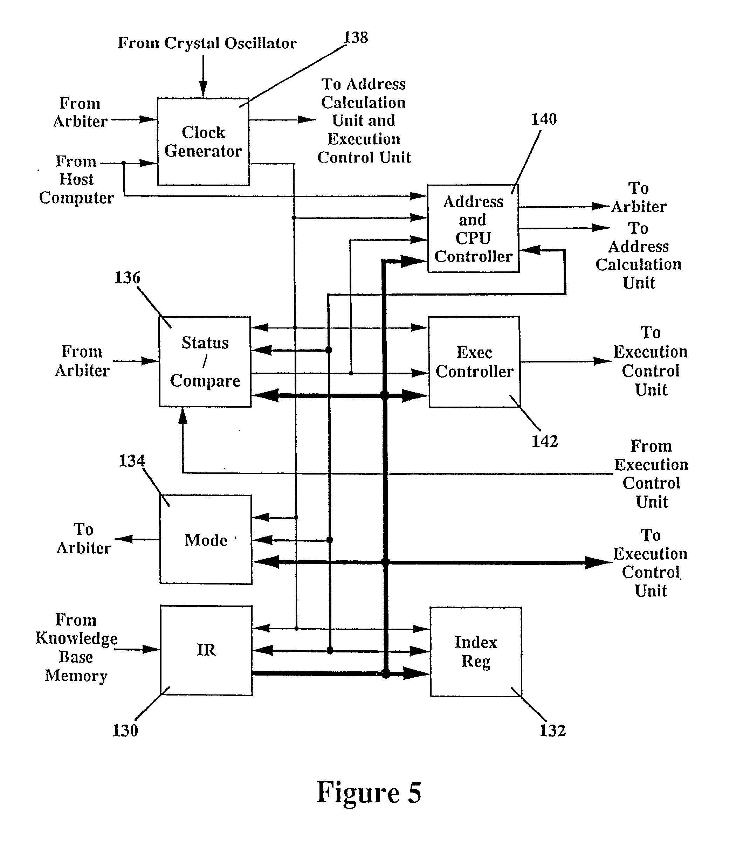

Further detail of the control unit 114 is illustrated in Figure 5. The control unit 114 includes an instruction register 130, an index register 132, a mode register 134, status/compare unit 136, a clock generator 138, an address and CPU controller 140, and an execution controller 142. Together these functions control the operation of the CPU 106.

The instruction register 130 is a 16-bit register which loads instructions provided by the knowledge base memory 104, and retains them until the instruction has been executed. This register provides the instruction information to the index register 132, the mode register 134, the status flags 136, the address and CPU controller 140, and the execution controller 142. The instruction register 130 loads new instructions under control of the address and CPU controller which signals when a new instruction is to be loaded. Timing and reset information is provided by the clock generator 138.

The index register 132 is an 8-bit register with a built-in decrement function. The index register 132 loads initial count values from the instruction register 130 from the immediate data field of the instructions (bits 7-0). Control signals indicating when to load new index values or decrement the current index values are provided by the address and CPU controller 140. The index register 132 in turn provides the address and CPU controller 140 and the execution controller 142 with a signal indicating that the index value has decremented to zero. The index register gets timing and reset information from the clock generator 138.

The mode register 134 is an 8-bit register used to store the current operating mode. The value of this current operating mode is provided to the arbiter 108 which determines the operating methods used by the host computer 102. The mode register loads new mode values using information provided from the functional and operational mode fields (bits 11-8 and bits 3-0) of the instruction in the instruction register 130. The address and CPU controller 140 controls the sequence and timing of the loading of the mode register with new mode values. Timing and reset information is provided by the clock generator 138.

The status/compare unit 136 is used to maintain the various condition flags, and perform flag comparison for conditional instructions. The arbiter 108 provides a signal indicating a pending message from the host computer 102. This signal is used to create the P (pending message) flag. The execution control unit 120 provides a signal indicating if there is a carry-out or a borrow from the current add or subtract operation. This signal is used to create the C (carry) flag. The execution control unit 120 also provides a signal indicating if the results of the current arithmetic operation are zero. This signal is used to create the Z (zero) flag as well as the D (divide by zero) flag. The actual loading of these flags is controlled by the address and CPU controller 140. The flags are compared to the condition test bits (bits 3-0) of the instruction provided by the instruction register 130. Using another signal provided by a polarity signal (bit 6) of the instruction in the instruction register 130, the status/compare unit 136 can compare any of the four flags as set, combinations of the four flags set, any of the four flags cleared, combinations of the four flags cleared, as well as always providing a valid condition compare or an invalid condition compare regardless of the states of the status flags. The valid condition comparison signal is provided to the address and CPU controller 140 as well as the execution controller 142 for determining next-state information. The P (pending message) flag is also provided directly to the address and CPU controller 140 and the execution controller 142 and is used to restart the machine upon receipt of a message from the host computer 102 after the CPU has executed a HALT instruction. Timing and reset information is provided by the clock generator 138.

The clock generator 138 is used to provide timing and reset information to the microprocessor 100. The clock generator takes primary timing information (20 MHz square wave) from the crystal oscillator 112, transfer request status from the arbiter, and asynchronous Reset information from the host computer 102. It provides a global Reset signal, which has been synchronized to the internal timing signals, to the arbiter 108, the instruction register 130, the index register 132, the mode register 134, the status/compare unit 136, the address and CPU controller 140, and the execution controller 142. This signal causes all of the connected units to reset to a predefined initial condition. The clock generator 138 also provides primary rate clocks (10 MHz) for the instruction register 130, the index register 132, the mode register 134, the status/compare unit 136, the address and CPU controller 140, the execution controller 142, the address calculation unit 116, the execution unit 118, and the execution control unit 120. This primary rate clock ensures that communication between all functional units is synchronous. The clock generator 138 also provides a secondary clock (20 MHz) which is used by the arbiter 108 for its internal sequencing, and is used by the index register and the execution control unit to generate active latch enable signals during the last half of a primary clock cycle.

The address and CPU controller 140 is a sequential state machine that generates control signals for the address calculation unit 116, the instruction register 130, the index register 132, the mode register 134, and the status/compare unit 136. The address and CPU controller 140 also provides enable and read/write control to the arbiter 108 and an Idle signal to the host computer 102 to indicate that the CPU is inactive and waiting for a message.

The address and CPU controller 140 was designed using a state transition description of the functionality and the State Machine Compiler provided by VLSI Technology, Inc., an approach well known in the art. Briefly, the State Machine Compiler takes a state transition description of a state machine, does logic minimization, product term sharing and other optimizations to provide a machine readable netlist that achieves the described functionality. This netlist is then assembled using registers and logic gates from the VLSI Technology Inc. VSC100 Standard Cell library.

The address and CPU controller 140 gets instruction information (bits 15-12 and bits 7-4) from the instruction register 130. This instruction information along with the valid condition compare and P (pending message) signals from the status/compare unit 136, the index equals zero signal from the index register 132, and the indexing signal from the address calculation unit 116 are used to determine the state sequencing performed by the address and CPU controller 140. The control signals from the address and CPU controller are designed in a manner substantially identical to that of a horizontal microcode machine. That is, there is a one-to-one correspondence with control signals coming out of the address and CPU controller 140 and the control signals going into each of the functional blocks being controlled. Timing and reset information is provided by the clock generator 138.

The execution controller 142 was designed using the same tools as was the address and CPU controller 140. The execution controller 142 takes all of the same inputs for sequencing and control as does the address and CPU controller 140, and operates in lock-step with the address and CPU controller 140. While both state machines are transitioning through the same states, each provides unique outputs to the functional units it is connected to. Because of the need for instruction dependent operations (such as source and destination register definitions as well as operand length definitions) the execution controller was designed in the manner of a vertical microcode machine. That is, the control signals from the execution controller are symbolic, and are translated into explicit functional control signals by the execution control unit 120. All of the output control signals of the execution controller go to the execution control unit 120.

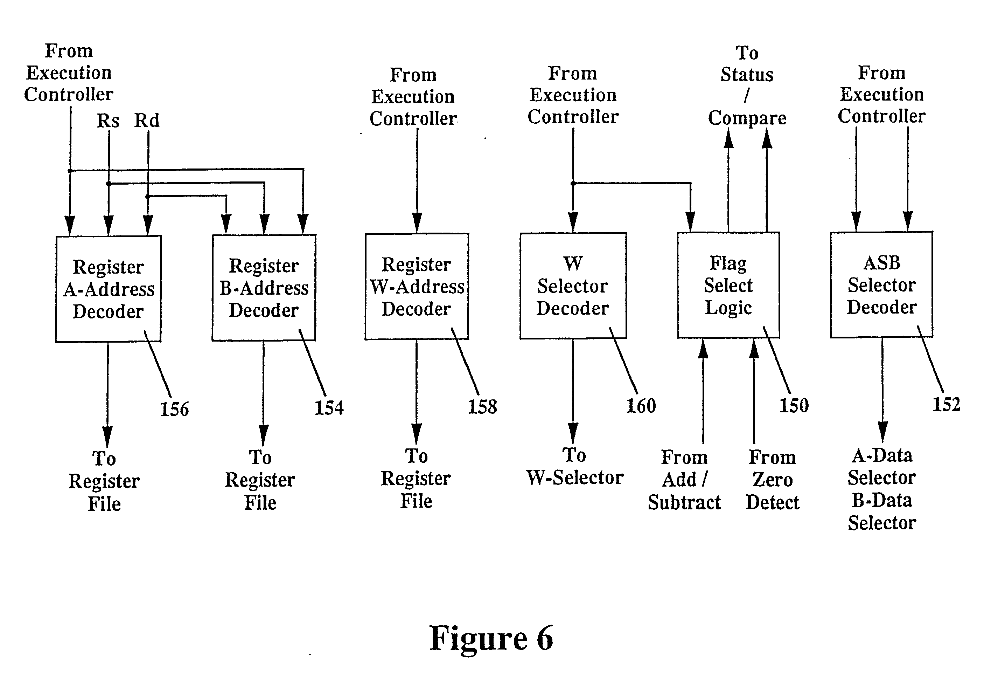

The execution control unit 120 is used to decode the symbolic control from the execution controller 142 into a format that the execution unit 118 requires. The execution control unit as illustrated in Figure 6 is composed of the flag select logic 150, the ASB selector decoder 152, the register B-Address decoder 154, the register A-Address decoder 156, the register W-Address decoder and the W Selector Decoder 160.

The flag select logic 150 is used to provide the correct carry-out and zero detect flags to the status/compare unit 136 of the control unit 114. The three carry-out flags (carry-out of byte operation, carry-out of word operation and carry-out of long-word operation) from the execution unit 118 are provided as inputs. The byte, word, and long-word signals from the execution controller 142 are used to select the respective carry-out signal for the status/compare unit. An additional input which is used to determine whether the adder/subtractor in the execution unit 118 is going to add or subtract is used to determine the polarity of the carry-out signal to the status/compare unit 136. If the adder/subtractor is going to subtract, the carry-out is active low, meaning it is a "1" when the subtract operation has a borrow. The flag select logic also takes the output from the byte, word, and long-word zero detect logic from the execution unit 120 and selects which signal will go to the status/compare unit 136. The selection is based on the status of the byte, word, and long-word signals from the execution controller 142.

The ASB selector decode 152 is used to control the A-selector and B-selector for the adder/subtractor in the execution unit 118. The ASB selector decoder 152 takes control signals from the execution controller 142 to determine if the A-selector will select data from the register file, or data from KBDREG. If the A-selector will select data from the A-data output from the register file, then the A-Address produced by the register A-Address decoder 156 is used to determine whether the lower 16-bits or the upper 16-bits of the A-data will be selected. If the Register A-Address is even, data is taken from the low 16-bits. If the Register A-Address is odd, data is taken form the high 16-bits. The ASB selector decode 152 also takes control signals from the execution controller 142 to determine if the B-selector will select data from the register file, or will select "0". If the B-selector will select data from the B-data output of the register file, then the B-Address produced by the register B-Address decoder 154 is used to determine whether the lower 16-bits or the upper 16-bits of the B-data will be selected. If the Register B-Address is even, data is taken from the low 16-bits. If the register B-address is odd, data is taken from the high-16 bits. Timing information is provided by the clock generator 138.

The Register B-address decoder 154 is used to determine which register will have its contents placed on the B-data output of the register file. The register B-address decoder provides a numerical (binary) representation of the selected register and a one-of-five register select. The numerical representation is used to indicate to the ASB selector decode if the selected B-address is even or odd, by the Register W-address decoder 158 to indicate which register the results of the arithmetic operations are to be written to, and by the register file to determine if the selected register is in the upper or lower logical separation of the register file. The one-of-five decoded register select is used to select which one of the register pairs in the register file will be selected. The register B-address decoder 154 is controlled by signals from the execution controller indicating the symbolic source of the B-data (Rd, Rs, or Rt) from the register file, and by the register definition fields (Rd is bits 11-8, Rs is bits 3-0) of the instruction in the instruction register. Control is also provided by the execution controller 142 to select the register that is the next word register or the next long-word register from the indicated Rs or Rd register.

The register A-address decoder 156 functions similarly to the register B-address decoder 154 except that it is used to determine which register will have its contents placed on the A-data output of the register file. The numerical (binary) representation of the selected register is used to indicate to the ASB selector decode 152 if the selected A-address is even or odd, and by the register file to determine if the selected register is in the upper or lower logical separation of the register file. The one-of-five decoded register select is used to select which of the register pairs in the register file will be selected. The register A-address decoder 156 is controlled by signals from the execution controller indicating the symbolic source of the A-data (Rs, Rd, or Rb) from the register file, and by the register definition fields (Rd and Rs) of the instruction in the instruction register.

The Register W-Address decoder 158 is used to provide controls for the register file to determine which register the result of the arithmetic operation will be written into, if it is to be written. The Register W-address decoder 158 provides one-of-ten enables to the latches in the register file. The Register W-address decoder 158 takes the binary output from the register B-address decoder as the address of the register to be written to, and control signals from the execution controller to determine if the register will be written to. There are two signals from the execution controller 142 that provide for an unconditional write, and a write conditional upon the status of the C flag in the status/control unit. The secondary timing signal from the clock generator is used to create a pulse on the one-of-ten outputs to the register file to actively write to the selected register.

The W-selector decoder 160 is used to determine the data on the YBUS that is to be written back into the register file. The W-selector is composed of four selectors, one for every 8-bits in the width of the register file. The W-selector decoder 160 has four separate controls, one for each selector. The W-Selector decoder 160 gets the byte, word, and long-word control signals from the execution controller 142, along with a signal from the register B-address decoder that determines if the B-address is even or odd. Depending upon the control signals, the W-selector produces data to the register file that has the appropriate byte or bytes that are to be modified from the YBUS, and the bytes from the BBUS that are not to be changed. This combination of new and old values ensures that when a register is written to in anything less than a long-word format, the bytes that have not been selected do not get modified.

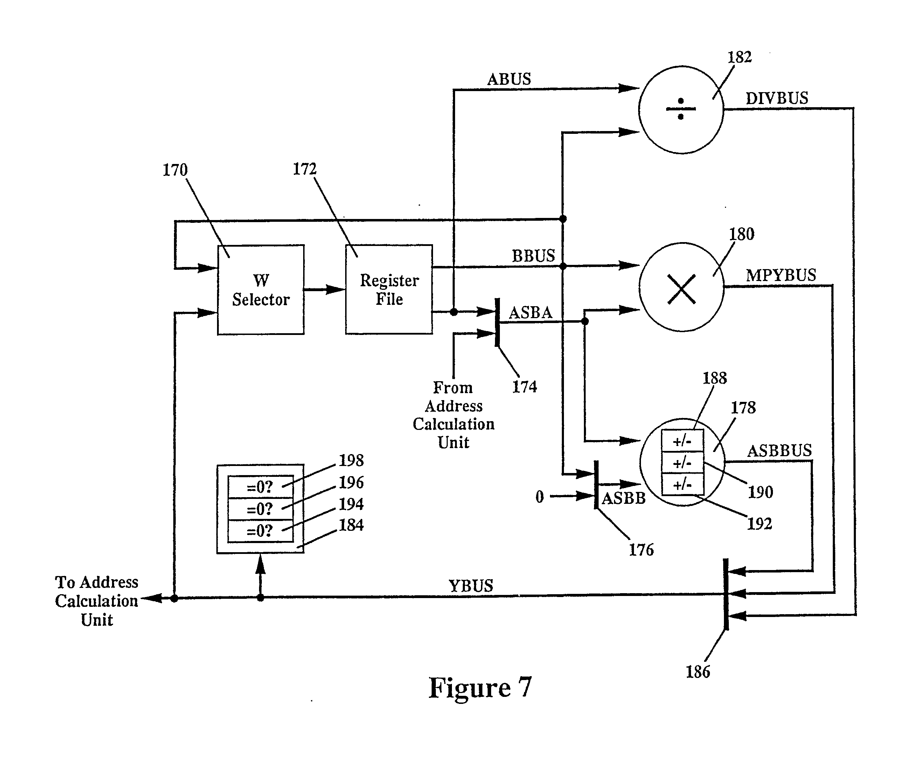

Further detail of the execution unit 118 is illustrated in Figure 7. The execution unit 118 is composed of the W-selector 170, the register file 172, the A-data selector 174, the B-data selector 176, the adder/subtractor 178, the multiplier 180, the divider 182, the zero detect 184, and the Y-data selector 186. The busses and functions in the execution unit 118 are 32-bits except where noted. The basic structure of the execution unit 118 is the same as the basic parallel functional unit model as implemented by the AMD2901 bit-slice processor. The basic functional unit consists of a one-bus in, two-bus out register file, source selectors for the functional blocks, and three functional arithmetic blocks in parallel, providing data back to the register file. Certain modifications were made in optimizing this basic structure to fit the requirements of byte, word, and long-word operations. These modifications are described in greater detail in the following paragraphs. The execution unit 118 was created using the VDP100 library of data path elements and the Datapath Compiler provided by VLSI Technology, Inc, a standard industry technique. The structure was defined at a functional block level, and the Datapath compiler assembled the proper physical logic blocks to create the logical equivalent of the defined functions.

The W-selector 170 is used to insert bytes of data from the YBUS into the selected register in the register file 172, while maintaining the data unchanged in the bytes not defined by the instruction. The W-selector 170 takes data inputs from the YBUS and BBUS and produces data for the register file 172 with selected bytes modified. Control for the individual selectors is provided by the W-selector decoder 160. The register that is being written into is always the same as the register selected by the register B-address decoder 154. The contents of the selected register is always placed on the BBUS for possible operation by the arithmetic units. If a byte operation is determined by the execution controller 142, the W-selector decoder 160 enables one of the bytes (bits 7-0 for even registers or bits 23-16 for odd registers) to source from bits 7-0 of YBUS, while the remaining bytes source from the respective locations on BBUS. In this way, although the register file 172 requires that all 32-bits of the selected register be written to, only the selected byte of the 32-bits is changed, and the remaining bytes are re-written with their previous values. Similarly, when a word operation is selected by the execution controller 142, the W-selector decoder enables two of the bytes (bits 15-0 for even registers or bits 31-16 for odd registers) to source from bits 15-0 of YBUS, while the remaining bytes source from the respective locations on BBUS. In this way, only the selected word of the 32-bits is changed, and the remaining word is rewritten with its previous value. If a long-word operation is selected by the execution controller 142, the W-selector decoder enables all 32-bits to source from bits 31-0 of YBUS, overwriting the entire contents of the register. By using such a structure it is possible to reference twice as many byte and word registers as long-word registers, making the register configuration more flexible.

The register file 172 provides the storage for all of the programmer accessible registers as well as the temporary storage register and registers on the A-data and B-data outputs to maintain synchronous operation with the rest of the CPU 106. The register file 172 is arranged as nine 32-bit registers. A more detailed explanation of the internal arrangement of the register file 172 is given on page 86 of "VDP100 Datapath Element Library", version 1.1 by VLSI Technology, Inc. The register file 172 receives data from the W-selector 170 over a 32-bit bus. The control signals from the register W-address decoder 158 signal which of the nine registers to store the data, and when it is to be stored. Data which is indicated by control signals from the register B-address decoder 154 and the register A-address decoder 156 come out of the register file and provide data to the BBUS and ABUS respectively. The BBUS distributes that data to the B-data selector 176, the multiplier 180, the divider 182, and the W-selector 170. The ABUS distributes its data to the A-data selector 174 and the divider 182.

The A-data selector 174 selects which data is to be presented to the adder/subtractor 178 and the multiplier 180 through the bus ASBA. Using control signals from the ASB selector decoder 152, the A-data selector 174 can provide the data from the ABUS originating from the register file 172, the high 16-bits of the data from the ABUS, or the 16-bits of data from the address calculation unit 116. In the cases where only 16-bits of data are provided, the most significant 16 bits are set to "0". By using this word manipulating function, any byte or word register, as well as any long-word register may be operated on by the adder/subtractor 178 and the multiplier 180.

The B-data selector 176 selects which data is to be presented to the adder/subtractor 178 through the bus ASBB. Using control signals from the ASB selector decoder 152, the B-data selector 176 can provide the data from the BBUS originating from the register file 172, the high 16-bits of the data from the ABUS, or 32-bits of "0". In the cases where only 16-bits of data is provided, the most significant 16-bits are set to "0". This word manipulation function is used in the same manner as the A-data selector 174.

The adder/subtractor 178 provides the addition and subtraction arithmetic functions of the execution unit 118, as well as the carry-out signals required by the execution control unit 120 to create the carry flag signal for the control unit 114. This block is created using three adder/subtractor functions VDP5ASB001 from the VLSI Technology Inc. VDP100 Datapath Compiler Library. The byte adder/subtractor 188 takes inputs from the low byte (bits 7-0) of the data from the A-data selector 174 and the low byte (bits 7-0) of the data from the B-data selector 176. The carry-out of this function is used as the carry-out of the execution control unit 120 when a byte add/subtract operation is defined by the execution controller 142. The word adder/subtractor 190 takes inputs form the low word (bits 15-0) of the data from the A-data selector 174 and the low word (bits 15-0) of the data from the B-data selector 176. The carry-out of this function is used as the carry-out of the execution control unit 120 when a word add/subtract operation is defined by the execution controller 142. The long-word adder/subtractor 192 takes inputs from all 32-bits of the data from the A-data selector 174 and the B-data selector 176. The arithmetic result of this function is provided to the Y-data selector 186 as the result of any add or subtract operation. The carry-out of this function is used as the carry-out of the execution control unit 120 when a long-word add/subtract operation is defined by the execution controller 142. Because the data provided to the adder/subtractor 178 by the A-data selector 174 and the B-data selector 176 can come from either the entire 32-bits of the A-data output or the B-data output (respectively) of the register file 172, the least significant bit of the contents of a byte, word, or long-word register is always aligned to be bit 0 of the long-word adder/subtractor 192, and the results produced by the adder/subtractor 178 are always aligned to be bit 0. This approach means that regardless of which 8 or 16 bits of register data is used, the result of the addition or subtraction operation will always provide data aligned most significant bit to least significant bit, with the least significant bit being bit 0 of the output data.

The multiplier 180 is used to provide the product of two numbers for operations requiring that function. The multiplier takes the low three bytes (bits 23-0) of data from the B-data output of the register file 172 and one byte (bits 7-0) of data from the A-data selector 174, and produces a four-byte product to the Y-data selector 186. The multiplier 180 was created using VDP3MLT002 from the VLSI Technology Inc. VDP 100 Datapath Library. Due to the construction of this functional unit by the VLSI Technology Inc. Datapath Compiler, it requires two time periods as defined by the primary timing signal (10 MHz) generated by the clock generator 138 to provide the product of the two specified data values.

The divider 182 provides the quotient resulting from the division of two numbers for operations requiring that function. The divider 182 takes a 32-bit dividend from the B-data output of the register file 172, divides it by a 24-bit divisor from the A-data output of the register file 172, and provides an 8-bit quotient to the Y-data selector 186. The divider 182 is a serial/parallel divider designed using the well-known non-restoring division technique. The sequencing and control for the divider 182 is provided by the divider control 162 of the execution control unit 120.

The zero detect 184 examines the data coming form the Y-data selector 186, and determines if it is zero. If the data is zero, a signal is sent to the flag select logic 150 in the execution control unit 120. There are three zero detectors of the type described as VDP5ZDT001 of the VLSI Technology Inc. VDP100 Datapath Compiler Library. The byte zero detect 194 signals if the low byte (bits 7-0) is all zeros. The word zero detect 196 signals if the low word (bits 15-0) is all zeros. The long-word zero detect 198 signals if the entire long-word (bits 31-0) is all zeros.

The Y-data selector 186 selects which data is to be sent to the W selector 170. The Y-data selector 186 gets data inputs from the adder/subtractor 178, the multiplier 180, and the divider 182. Control for the Y-data selector 186 is provided by the execution controller 142.

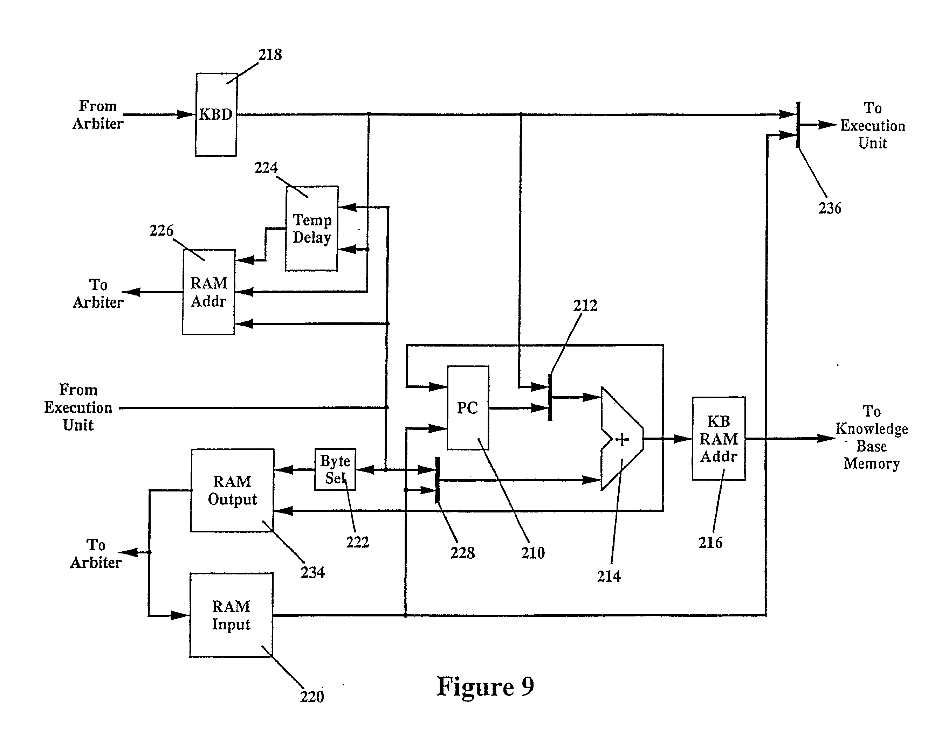

Further detail of the address calculation unit 116 is illustrated in Figure 9. The address calculation unit 118 includes a program counter 210, a base address source selector 212, a base address index adder 214, a knowledge base address register 216, a knowledge base data register 218, a RAM data input register 220, a RAM data byte selector 222, a temporary delay register 224, a RAM address register 226, an index data selector 228, and a RAM data output register 234. The busses and functions in the address calculation unit 116 are 16-bits. The address calculation unit 116 was created using the VDP100 library of data path elements and the Datapath Compiler provided by VLSI Technology Inc. The structure was defined at a functional block level, and the Datapath Compiler automatically assembled and connected the proper physical logic blocks to create the logical equivalent of the defined functions.

The program counter 210 is used to store the value of the 16-bit program counter for instruction execution. It is composed of separately controllable high and low byte registers. The control signals for these registers are provided by the address and CPU controller 140. The program counter 210 provides the program address value to the base address source selector 212 for use in indexing and incrementing the program counter 210. The program counter 210 is provided new address data by the base address index adder 214, and by the RAM data input register 220. The input from the base address index adder 214 is used for incrementing the program counter, or jumping to a new location. The input from the RAM data input register 220 is used for restoring program counter addresses previously stored in RAM by subroutine instructions.

The base address source selector 212 is used to provide a base address for the base address index adder 214. The control signals for this selector are provided by the address and CPU controller 140. The base address values are provided by the program counter 210 and the knowledge base data register 218. The selected base address value is presented to the base address index adder 214 for calculating new effective addresses.

The base address index adder 214 is used to calculate a new effective address from a base address and an index value. The carry-in value for the base address index adder 214 is provided by the address and CPU controller 140 to enable the base address index adder 214 to increment the effective address by one. The base address index adder 214 receives base address information from the base address source selector 212, and index information from the index data selector 228. It provides effective address information to the knowledge base address register 216 and the program counter 210.

The knowledge base address register 216 is used to synchronize and hold address information for the knowledge base memory 104. Effective address information is provided by the base address index adder 214, and control signals are provided by the address and CPU controller 140. The stored effective address information is used by the knowledge base memory 104 for retrieving logical statements, membership functions, general instructions, and constant data.

The knowledge base data register 218 is used to synchronize and store membership function data, general instructions, and constant data from the knowledge base memory 104. Data values are provided to the knowledge base data register 218. control signals from the address and CPU controller 140 determine whether output of the knowledge base data register 218 will be the data provided by the knowledge base memory 104, all zeros, or the data previously provided by the knowledge base data register. The data stored here is provided to the base address source selector 212, the temporary delay register 224, the RAM address register 226, and the execution data output selector 236.

The RAM data byte selector 222 is used to determine which byte of data from the execution unit 118 will be presented to the RAM data output register 234. Control signals for the RAM data byte selector 222 are provided by the address and CPU controller 140. The selected byte (bits 7-0 or bits 15-8) are presented to the RAM data output register 234 for transfer to the arbiter 108 for storage.

The temporary delay register 224 is used as a short term storage register for address information to be presented to the RAM address register 226. Control signals for the temporary delay register 224 are provided by the address and CPU controller 140. Data values are stored from the knowledge base data register 218 or the execution unit 118.

The RAM address register 226 is used for storing address information for the arbiter 108. The RAM address register 226 is provided address information by the temporary delay register 224, the knowledge base data register 218, or the execution unit 118. This address information is presented to the arbiter 108 during the entire access request cycle.

The index data selector 228 is used to determine the index value for effective address calculations. Using control signals provided by the address and CPU controller 140, the index data selector 228 will provide index data to the base address index adder 214 from the execution unit 118 or from the RAM data input register 220, or a "0" index. If data is provided from the execution unit 118 or the RAM data input register 220, the value presented to the base address index adder 214 is shifted right one bit, effectively dividing the original value by two. This action is taken because knowledge base memory 104 is arranged 16-bits wide (two bytes), and the index calculation is byte oriented. The least significant bit, bit 0, of the original value is presented to the address and CPU controller in order to make a determination whether the lower byte (bits 7-0) or the upper byte (bits 15-8) will be operated on by the execution unit 118. If the least significant bit is 0, the lower byte is selected. If the least significant bit is 1, the upper byte is selected.

The RAM data output register 234 is used to provide data to the arbiter 108 for storage. Using control signals provided by the address and CPU controller 140, the RAM data output register 234 loads either the low byte (bits 7-0) or the high byte (bits 15-8) of the base address provided by the base address source selector 212, or the data provided by the RAM data byte selector 222. The output of the RAM data output register 234, when enabled, provides the data from the CPU 106 for the arbiter 108.

The execution data output selector 236 is used to select the data from the address calculation unit 116 that will be provided to the execution unit 118. Using control signals provided by the address and CPU controller 140, the execution data output selector 236 can provide 16-bit data from the knowledge base data register 218, the upper byte (bits 15-8) of the data being provided by the knowledge base data register 218, the byte of data from the RAM data input register 220, or the byte of data shifted left 8 places. This approach allows a byte of data from either the knowledge base data register 218, or the RAM data input register 220 to be transferred to the execution unit 118 for further processing.

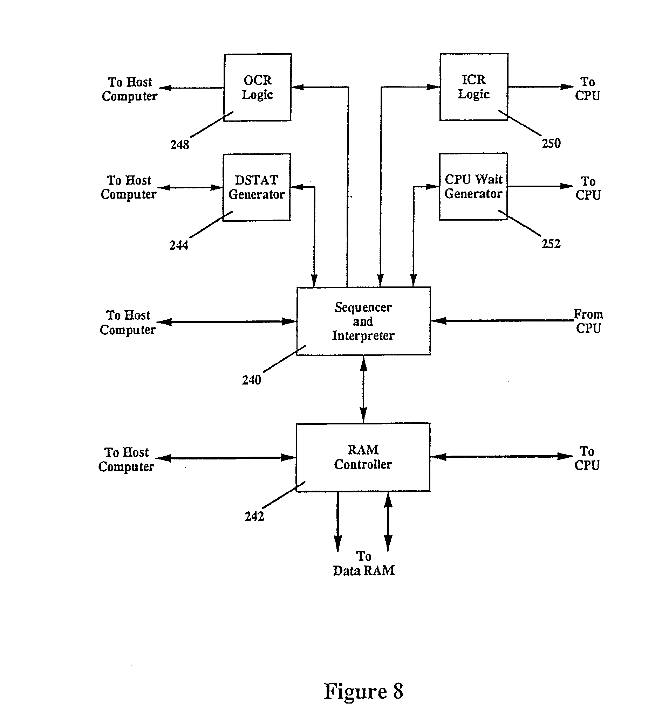

Further detail of the arbiter 108 is illustrated in Figure 8. The arbiter 108 includes a sequencer and interpreter 240, a RAM controller 242, a DSTAT generator 244, an OCR logic unit 248, and ICR logic unit 250, and a CPU wait generator 252. The function of the arbiter 108 is to provide access arbitration to the data RAM 110 from the host computer 102 and the CPU 106. It is functionally equivalent to a two-port memory such as the IDT 7130 with additional features for accessing peripheral devices provided by the host computer 102 and interfacing to various types of computer busses.

The sequencer and interpreter 240 accepts operating mode control from the mode register 134, and uses these controls to interpret enable and control signals from the host computer 102. The sequencer and interpreter 240 controls the activity of the RAM controller to determine whether the host computer 102 or the CPU 106 has access to the data RAM 110. The sequencer and interpreter also controls the data status signals to the host computer 102 through the DSTAT generator 244. Valid host computer access cycles are indicated to the sequencer and interpreter 240 by the enable generator 246. The sequencer and interpreter 240 decodes access cycles by both the host computer 102 and the CPU 106 to determine if the Input Communication Register (address 00) or the Output Communication Register (address 01) is being accessed. If so, the OCR logic unit 248 and the ICR logic unit 250 are notified so that they may set or clear their respective interrupt and flag signals. The sequencer and interpreter 240 also sends control signals to the DSTAT generator 244 and the CPU wait generator 252 to indicate to the host computer 102 or the CPU 106 that their request will have to wait until the other request is finished.

The RAM controller 242 controls the actual interface and signalling to the data RAM 110. The RAM controller 242 provides control signals, address information and data to the data RAM 110 in order to service the read or write request from the host computer 102 or the CPU 106. The host computer provides the enable, control signals, address information, and data to the RAM controller in order to request access to the data RAM 110. Similarly, the CPU 106 also provides the enable, control signals, address information, and data to the RAM controller 242. The sequencer and interpreter 240 indicates to the RAM controller 242 which request to service. The RAM controller 242 in turn indicates to the sequencer and interpreter 240 when the current request has been serviced, allowing other servicing to take place.

When the CPU 106 makes a request of the arbiter 108 in a predetermined address range, the sequencer and interpreter 240 initiates an external access cycle to peripherals provided by the host computer 102. If the sequencer and interpreter 240 determines by monitoring activity on the control and enable signals, that the host computer 102 is not using the peripherals, the sequencer and interpreter 240 takes over the enable and control signals and uses them to control peripherals provided by the host computer 102. Otherwise, the sequencer and interpreter 240 signals to the CPU 106 that it must wait for access to the peripherals. The RAM controller 242 creates a virtual address to send to the host computer 102 created from the address information provided by the CPU 106. In the event of a read cycle from the peripheral devices, the RAM controller takes the data from the host computer 102 and provides it to the CPU 106. In the event of a write cycle to the peripheral devices, the RAM controller 242 takes the data from the CPU 106 and provides it to the host computer 102.

The DSTAT generator 244 is used to signal to the host computer 102 when an access request has been completed. Control information from the sequencer and interpreter 240 indicates when the access request has completed. Control signals from the mode register 134 indicate which method will be used to signal the host computer 102. The DSTAT generator 244 takes these controls from the sequencer and interpreter 240 and the mode register 134 and generates the proper signal for the host computer 102.

The OCR logic unit 248 is used to generate the signal to the host computer 102 that the CPU 108 has written to the Output Communication Register (OCR) at address 01. The OCR logic unit 248 gets signals from the sequencer and interpreter indicating that the CPU 106 is writing to the OCR and signals indicating that the host computer 102 is reading from the OCR. When the CPU 106 writes to the OCR, an interrupt signal to the host computer 102 is activated, indicating that there is a message waiting for it. When the host computer reads the OCR, this interrupt signal is cleared, and goes to its inactive state.

The ICR logic unit 250 is used to generate the pending flag (Pflag) signal to the status/compare unit 136, indicating that the host computer 102 has sent a message to the CPU 106. The ICR logic unit 250 gets signals from the sequencer and interpreter 240 indicating that the host computer 102 is writing to the ICR, and that the CPU 106 is reading the ICR. When the host computer 102 writes to the ICR, the Pflag goes to an active state, indicating that there is a message waiting for the CPU 106. When the CPU reads the ICR, the Pflag signal is cleared, and goes to its inactive state.

The CPU wait generator 252 is used to halt the CPU and force it to wait for its turn at the data RAM 110 or peripherals provided by the host computer 102. When the sequencer and interpreter 240 signals to the CPU wait generator 252 that the current CPU 106 access cycle must wait, the CPU wait generator 252 provides a signal to the clock generator 138 which causes it to stop all timing information on its primary timing signal (10 MHz). When the sequencer and interpreter 240 signals to the CPU wait generator 252 that the CPU 106 may now have access to the data RAM 110 or the peripherals provided by the host computer 102, the signal to the clock generator 138 is cleared, and the clock generator is again able to produce the primary timing signal (10 MHz) for use by the components of the CPU 106, including the address and CPU controller 140 and the execution controller 142.

The computer hardware executes the instructions of the instruction set. A discussion of these instructions follows.

The evaluation of the logical statements by the CPU 106 is dependent upon the state definitions of the address and CPU controller 140 and the execution controller 142. In order to minimize the physical size and complexity of the address and CPU controller 140 and the execution controller 142, many states are shared, although, dependent upon the actual instruction executed, different control signals may be activated.

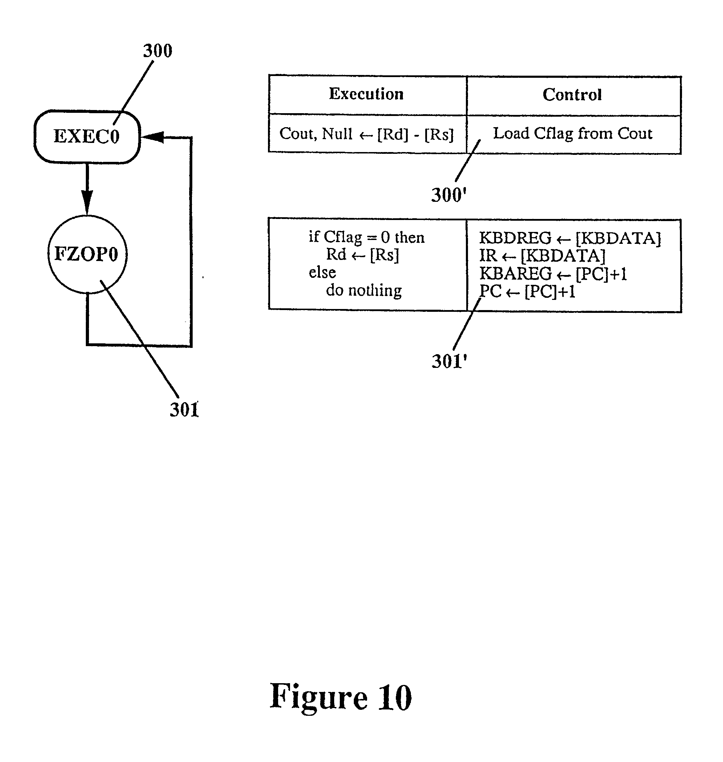

Figure 10 illustrates the state sequencing involved for the execution of the FZAND (fuzzy AND) instruction using the register direct addressing mode. The FZAND instruction compares two registers, selects the minimum value of the two registers, and stores the minimum value in the destination register. State EXEC0, numeral 300, is the initial state for all instructions. (In Figures 10-15, corresponding primed numbers refer to associated control functions.) It is in this state that the instruction in the instruction register 130 is decoded, and the state execution sequence is determined. For the FZAND instruction, state EXEC0 300 causes the execution unit 118 to compare the contents of the source and destination registers indicated by the source and destination field of the instruction. The address and CPU controller instructs the status/compare unit 136 to load the carry-out flag from the execution control unit 120.

For the FZAND instruction, state FZOP0, numeral 301, instructs the execution controller 142 to conditionally transfer the contents of the source register into the destination register if the carry flag was cleared. For the carry flag to have been cleared, the value in the source register would be less than or equal to the value in the destination register. If the carry flag is set, the value in the source register would be greater than the value in the destination register, and no data transfer takes place. The address and CPU controller 140 also instructs the address calculation unit 116 to increment the program counter (PC) 210, load the knowledge base address register (KBAREG) 216 with the new address, reload the knowledge base data register (KBDATA) 218, and load the instruction register (IR) 130 with the next instruction code in order to execute the next instruction.

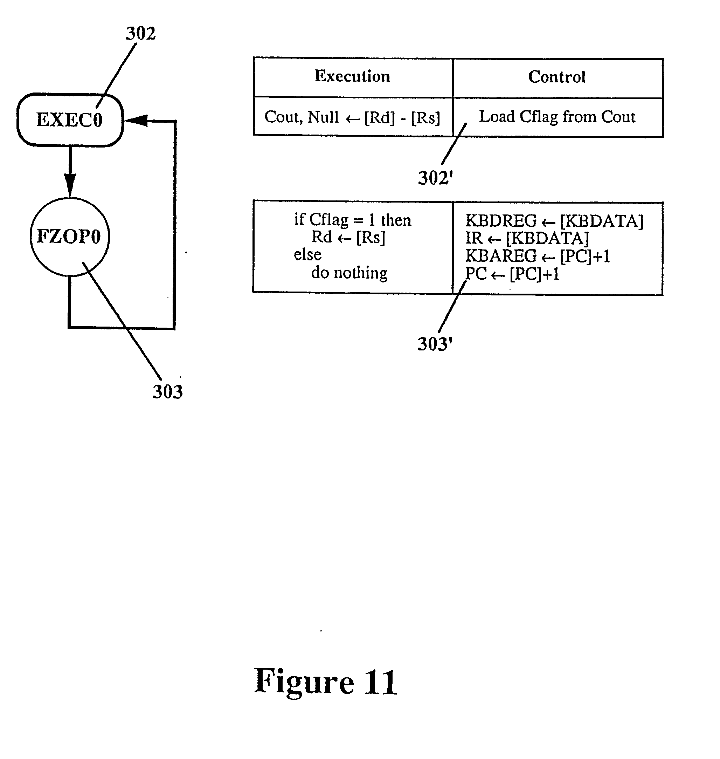

Figure 11 illustrates the state sequencing involved for the execution of the FZOR (fuzzy OR) instruction using the register direct addressing mode. The FZOR instruction compares two registers, selects the maximum value of the two registers, and stores the maximum value in the destination register. For the FZOR instruction, state EXEC0, numeral 302) causes the execution unit 118 to compare the, contents of the source and destination registers indicated by the source and destination field of the instruction. The address and CPU controller 140 instructs the status/compare unit 136 to load the carry-out flag from the execution control unit 120.

For the FZOR instruction, state FZOP0, numeral 303, instructs the execution controller 142 to conditionally transfer the contents of the source register into the destination register if the carry flag was set. For the carry flag to have been set, the value in the source register would be greater than the value in the destination register. If the carry flag is clear, the value in the source register would be less than or equal to the value in the destination register, and no data transfer takes place. The address and CPU controller 140 also instructs the address calculation unit 116 to increment the program counter 210, load the knowledge base address register 216 with the new address, reload the knowledge base data register 218 and load the instruction register 130 with the next instruction code in order to execute the next instruction.

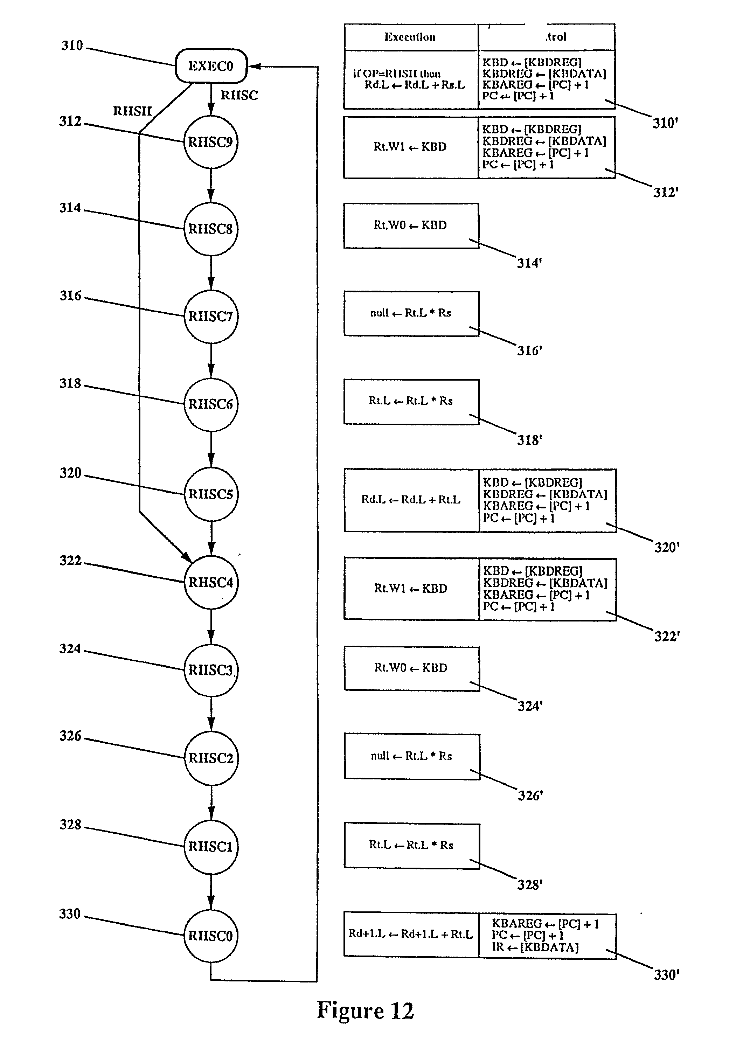

Figure 12 illustrates the state sequencing involved in the execution of the RHSC (right hand side using centroid method) and RHSH (right hand side using height method) instructions. The RHSC and instruction is used to perform the computations 52, 54, 64 and 66 using data from 50 and 38 in order to update the registers 60 and 62, as illustrated in Figure 3.

For the RHSC instruction, the state EXEC0, numeral 310, instructs the address and CPU controller 140 to transfer the high word of the precomputed area from the knowledge base data register 218 into the execution unit 118 for storage. The low word of the precomputed area is to be loaded into the knowledge base data register 218 during the next cycle. The knowledge base address register 216 and the program counter 210 are both updated to reflect the next address in the sequence.

The state RHSC9, numeral 312, instructs the execution controller 142 to send the proper symbolic commands to the execution control unit 120 to place the high word of the precomputed area into the register file 172. The address and CPU controller 140 sends command signals to transfer the low word of the precomputed area from the knowledge base data register 218 into the execution unit 118 for storage. The knowledge base address register 216 and program counter 210 are both updated to point to the high byte of the precomputed moment.

The states RHSC7, numeral 316, and RHSC6, numeral 318, instruct the execution controller 242 to send the proper commands to the execution control unit 120 to multiply (numeral 52) the precomputed area previously loaded into the register file 172 by the conjugate degree of belief 38 also stored in the register file. This result is stored in the temporary register until state RHSC5, numeral 320, in which the weighted area 56 is added 64 to the accumulated weighted areas 60 and the sum is returned to the register 60.

In the same manner as states EXEC0 310, RHSC9 312 and RHSC8 314, states RHSC5 320, RHSC4 322, and RHSC3 324 cause the address and CPU controller 140 and the execution controller 142 to fetch from the knowledge base memory 104 and store in the register file 172 the precomputed moment.

States RSHC2, numeral 326, and RHSC1, numeral 328 instruct the execution controller 242 to send the proper commands to the execution control unit 120 to multiply 54 the precomputed moment previously loaded into the register file 172 by the conjugate degree of belief 38 also stored in the register file. This result is stored in the temporary register until state RHSC0 330, in which the weighted moment 58 is added 64 to the accumulated weighted moments 62 and returned to the proper register 62. State RHSC0 330 also causes the address and CPU controller to fetch the next instruction for execution.

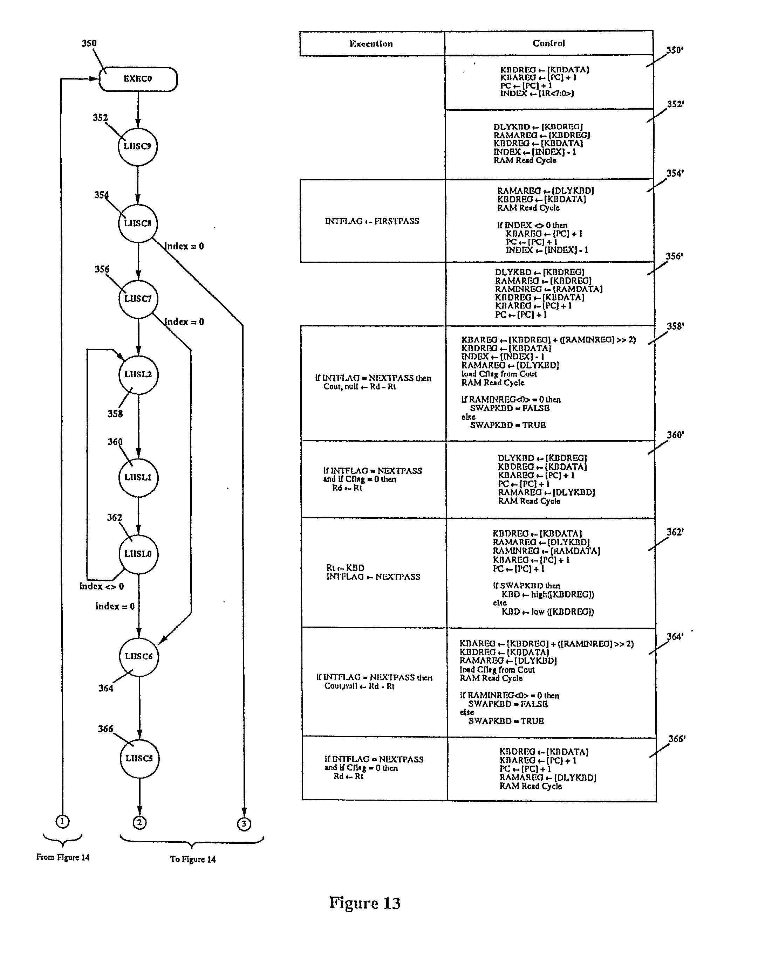

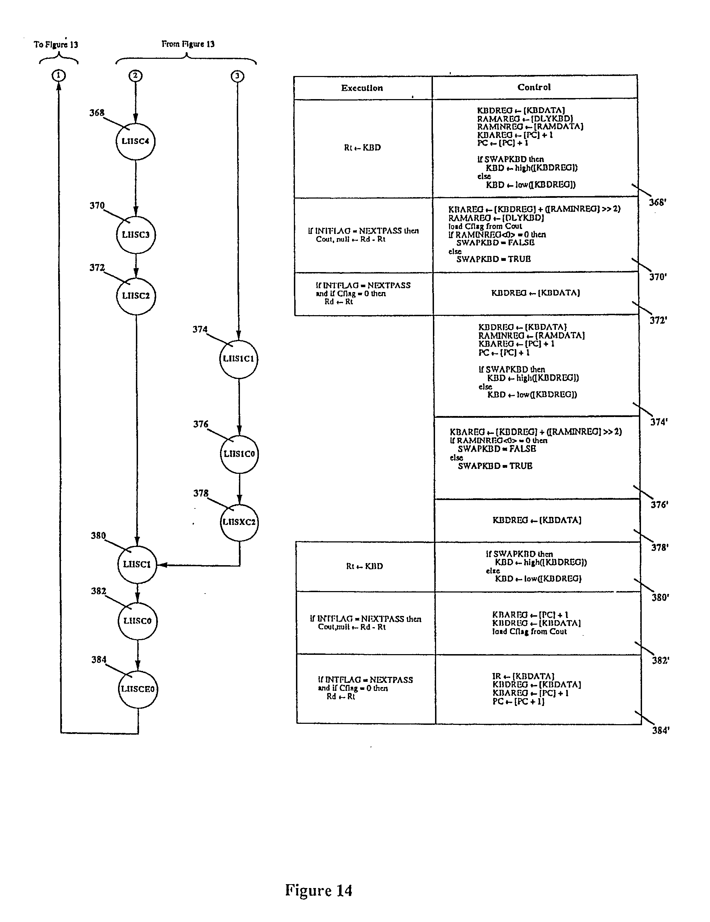

Figures 13 and 14 illustrate the state sequencing involved for the execution of the LHS (Left Hand Side) instruction. The LHS instruction takes as parameters the registers for storing the conjugate weight value 38, the number of premises to test, and a list of system observations p and associated membership function tables 34. The address and CPU controller 140 and the execution control unit 142 then iteratively perform the premise tests using the index register 132 to maintain a count of the number of premises remaining to test, and loops in the state sequencing to allow the iterative process. The execution of the LHS instruction follows the process illustrated in Figure 2.

The EXEC0 state, numeral 350, for the LHS instruction loads the index register (INDEX) 132 with the data from bits 7-0 of the instruction register 130 indicating the number of premise tests to perform. The address of the first parameter p is loaded from the knowledge base memory 104 into the knowledge base data register 218. The program counter 210 is incremented and the new address information presented to the knowledge base memory 104 through the knowledge base address register 216.

The states LHSC9, numeral 352, and LHSC8, numeral 354, retrieve the i value 28 of the indicated parameter p from the data RAM 110 by making a request to the arbiter 108. During state LHSC9 352 the index register 132 is decremented. The value in the index register 132 is tested during state LHSC8 354 to determine if only one premise was to be tested. If this was the case, the execution proceeds to state LHS1C1 374 to finish execution. Otherwise, if the value in the index register 132 is not zero, execution proceeds to state LHSC7, numeral 356.

State LHSC7 356 loads the base address 30 of the membership function table 34 from the knowledge base memory 104. This base address 30 is added to the i value 28 of the parameter, and is used in states LHSL2 258 and LHSC6 364 to access the address 32 in knowledge base memory 104 containing the degree of belief f($p_i$). The value in the index register 132 is again decremented during state LHSC7 356 to determine if there are enough premise tests remaining to warrant using the iterative loop of states LHSL2 358, LHSL1 360, and LHSL0 362. If the value in the index register 132 is zero, execution proceeds to LHSC6 364. Otherwise, the loop is entered via state LHSL2 358.

On the first pass through the iterative loop, as indicated by the state of INTFLAG, an internal state flag, no execution action occurs until state LHSL0 362. At this time, INTFLAG is set to indicate that the first pass is no longer being processed. The states LHSL2 358, LHSL1 360, and LHSL0 360 are used to compare the new degree of membership 36, update the conjugate value $w_j$ 38 in the register file 172, and fetch the next degree of membership as required. The address and CPU controller 140 maintains all of the addressing, indexing, and byte swapping necessary to provide the execution unit 118 with the proper degree of membership.

When the value in the index register 132 has decremented to zero, the state transition from state LHSL0 362 goes to LHSC6 364. There are then additional states LHSC6 364, LHSC5 366, LHSC4 368, LHSC3 370, LHSC2 372, LHSC1 380, LHSC0 382, and LHSCE0 384 required to finish all of the remaining membership function indexing, compare 36 and conjugate value update 38 procedures to finish processing the instruction.

If there is only one premise test to perform, execution proceeds form state LHSC8 354 to LHSC1C1 374 to accomplish the single premise test. States LHS1C1 374, LHS1C0 376, and LHSXC2 378 are used to retrieve the base address 30 of the membership table 34 during state LHSC1 380. The single comparison 36 is made with the conjugate value 38 previously in the register file 172 during state LHSC0 382, and the conjugate value 38 updated if necessary during LHSCE0.

State LHSCE0 also loads the instruction register with the next instruction to execute, as well as updating the Program Counter 210 and the knowledge base address register 216.

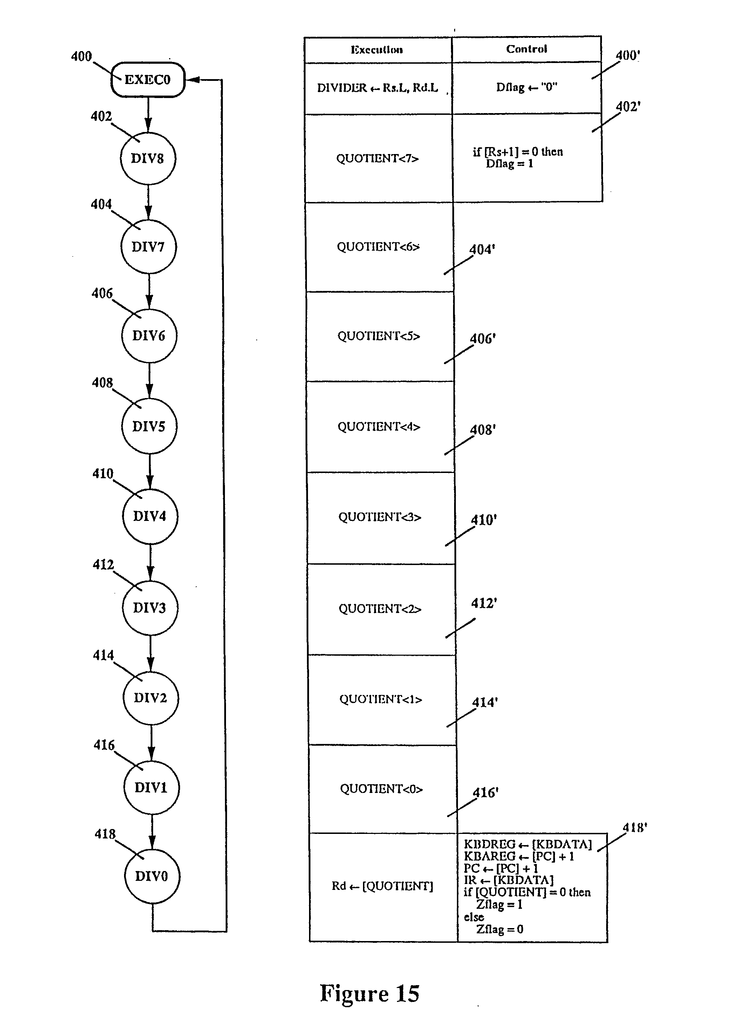

Figure 15 illustrates the state sequencing involved in the execution of the DFUZ (defuzzifying Conclusion) instruction. This instruction performs the division 68 of the weighted moments $M_{jt}$ total 62 and $A_{jt}$ total 60 in the register file 172, and places the crisp control parameter 70 into the register file 172.

State EXEC0 for the DFUZ instruction transfers the contents of the weighted moments $M_{jt}$ total register 62 to the dividend register of the divider 182, and the contents of the weighted areas $A_{jt}$ total register 60 to the divisor input of the divider 182. The D (Divide by Zero) flag of the status/compare unit is cleared to allow for detection of the divide by zero condition.

The divider 182 uses a well known sequential non-restoring division technique that requires one divide cycle per bit of output resolution. Since the quotient from the divider 182 is eight bits, states DIV8 402, DIV7 404, DIV6 406, DIV5 408, DIV4 410, DIV3 412, DIV2 414, and DIV1 416 are used to provide the eight divide cycles required to produce the 8-bit quotient. State DIV8 402 also tests the divisor to determine the status of the D flag of the status/compare unit 136. If the divisor is zero then the D flag is set. Otherwise, it is left as is.

The final state DIV0 418 is used to store the quotient of the division 60 into the control parameter register 70 in the register file 172. The quotient is also tested to see if it is zero. If it is zero, the Z (zero) flag in the status/compare register is set. Otherwise, it is cleared.

The microprocessor 100 also has many well known, conventional instructions. The ADD (addition) instruction adds two values and stores the sum in the register file 172. The SUB (subtract) instruction subtracts two numbers and stores the difference in the register file 172. The LOAD (load data) instruction takes data from knowledge base memory 104 or Data RAM 110 and places it in the register file 172. The CMP (compare) instruction compares the magnitude of two numbers and sets the C and Z flags in the status/compare unit 136 based on the result of the comparison. The MULT (multiply) instruction multiplies two values and stores the product in the register file 172. The HALT (halt) instruction stops program execution and waits for a message from the host computer 102. The JMP (jump to new address) instruction tests the flags in the status/compare unit 136 and conditionally loads the program counter 210 with non-sequential address information. The JSR (jump to subroutine) instruction tests the flags in the status/compare unit 136 and conditionally stores the contents of the program counter 210 into data RAM 110 and loads the program counter 210 with non-sequential address information. The RTS (return from subroutine) instruction tests the flags in the status/compare unit 136 and conditionally restores to the program counter 210, the contents of the program counter previously stored by the JSR instruction.

An example aids in the understanding of the approach followed by a user of the computer and analytical approach of the invention. The user first develops the logical statements and membership functions for a specific application that is the controllable system 109. The formulation of the logical statements (or rules) and the associated membership functions is not part of the present invention, which instead deals with how the logical statements and membership functions are processed. In a typical case, however, the formulation comes from a human "expert". In control problems of industrial significance, the problem might be the control of a machine or chemical plant, for example, and the expert knowledge and membership functions are provided by a person (or persons) skilled in the control of the machine or plant.

The logical statements are compiled into a machine-readable form with an FC-110 compiler. This compiler runs on an IBM PC computer using as input information the formulation of logical statements and membership functions. This FC-110 compiler is a proprietary product of Togai InfraLogic, Inc., Irvine, California, and is available for license. This compiler is not a part of the present invention, but may be used to advantage in conjunction with the present invention.

The output of the compiler is machine readable code that is loaded into and stored in the knowledge base memory 104. This information is the "expert" information upon which the computer can operate.

Using this knowledge base and the continuing input data measurements (which are the $p_{im}$ of Figure 1), the fuzzy logic computer of the invention produces output control parameters, numeral 70 of Figure 3, to the controllable features of the system. The problem is thereby solved and control implemented in a manner that reflects the expert knowledge of the person who supplied the logical statements and membership functions.

The present invention therefore provides a special purpose, reduced instruction set computer (RISC) that is adapted to the fast execution of logical statements formulated in fuzzy logic. The computer employs an instruction set that permits the performance of a wide variety of logical statements in a manner that is much faster than possible if the same fuzzy logical statements were executed on a more general purpose computer. Moreover, the instruction set and analytical approach have been specially formulated to permit the formulation of systems control problems via the fuzzy logic approach with software manipulation only, rather than requiring controller hardware changes as has often been the case with prior attempts to implement fuzzy logic.

It will be appreciated that the approach of the invention yields important advantages in performance and fabricability as compared with prior approaches. Although some preferred embodiments of the invention have been described in detail for purposes of illustration, various modifications may be made without departing from the spirit and scope of the invention. Accordingly, the invention is not to be limited except as by the appended claims.

## Claims

1. A computer comprising:
   a programmable digital microprocessor; and
   a dedicated fuzzy logic instruction set.

2. The computer of claim 1, wherein the microprocessor includes only fixed point arithmetic functions.

3. The computer of claim 1, wherein the microprocessor includes separate address calculation and data execution.

4. The computer of claim 1, wherein the microprocessor is implemented on a single chip.

5. The computer of claim 1, wherein
   the microprocessor contains a register having a plurality of paired moments and areas of conclusion membership functions stored therein, and
   the fuzzy logic instruction set includes instruction execution means for forming a plurality of weighted moments and areas by multiplying the moments and areas stored in the register by respective weighting factors, and for adding the weighted moments together and for adding the weighted areas together.

6. The computer of claim 1, wherein
   an antecedent membership function is stored in a register of the microprocessor,
   the microprocessor includes means for receiving measured values of a data parameter corresponding to the antecedent membership function, and

the fuzzy logic instruction set includes instruction execution means for evaluating a logical statement utilizing the membership function and the data parameter.

7. The computer of claim 1, wherein

a conclusion membership function is stored in a register of the microprocessor in the form of a moment and an area of the membership function, and

the fuzzy logic instruction set includes instruction execution means for producing a single valued control signal from the conclusion membership function.

8. The computer of claim 1, wherein

a first membership function is stored in a first register of the microprocessor and a second membership function is stored in a second register of the microprocessor,

the microprocessor includes means for receiving measured values of a first data parameter corresponding to the first membership function and means for receiving measured values of a second data parameter corresponding to the second membership function, and

the fuzzy logic instruction set includes instruction execution means for comparing the contents of the first and second registers at their respective measured data parameter values, and storing the smaller contents value in a destination register.

9. The computer of claim 1, wherein

a first membership function is stored in a first register of the microprocessor and a second membership function is stored in a second register of the microprocessor,

the microprocessor includes means for receiving measured values of a first data parameter corresponding to the first membership function and means for receiving measured values of a second data parameter corresponding to the second membership function, and

the fuzzy logic instruction set includes instruction execution means for comparing the contents of the first and second registers at their respective measured data parameter values, and storing the larger contents value in a destination register.

10. A computer that performs fuzzy logic control of a system, comprising:

a programmable digital microprocessor;

a dedicated fuzzy logic instruction set;

a set of membership functions available to the microprocessor, each membership function being a functional relation between a degree of belief $f(p_i)$ and a physical parameter $p_i$ of a system;

a set of $j$ logical statements available to the microprocessor, each logical statement having the physical parameters as antecedents and producing a conclusion;

means for determining as a preliminary operation the moment and area of each conclusion membership function, the moment M of each membership function being the sum over all $p_i$ of the product $p_i \times f(p_i) \times dp_i$, and the area A being the sum over all $p_i$ of the product $f(p_i) \times dp_i$, where $dp_i$ is the difference between succeeding values of $p_i$;

means for recording a set of $p_{im}$ values;

means within the fuzzy logic instruction set for evaluating each of the logical statements for the measured $p_{im}$ values and their respective membership functions, the means for evaluating including:

means for determining a conjugate value of the antecedent membership functions of the logical statement,

means for calculating a weighted moment of the conclusion membership function as the conjugate value of the antecedent membership functions times the preliminarily computed moment of the conclusion membership function, and

means for calculating a weighted area of the conclusion membership function as the minimum value of the antecedent membership function times the preliminarily computed area of the conclusion membership function;

means within the fuzzy logic instruction set for combining the conclusions of the $j$ logical statements by adding together the weighted areas for each conclusion membership function to form a total weighted area, and adding together the weighted moments for each conclusion membership function to form a total weighted moment;

means within the fuzzy logic instruction set for forming a crisp output for all the logical statements by dividing the total weighted moments by the total weighted areas; and

means for providing the crisp output to the system as a control parameter.

11. The computer of claim 10, wherein the microprocessor is connected directly to the system.

12. The computer of claim 10, wherein the microprocessor is embedded within a second computer, which is connected directly to the system.

13. A computer for performing fuzzy logic control of a system, comprising:

a programmable digital microprocessor;

a dedicated fuzzy logic instruction set;

a set of logical statements, membership functions for the antecedents of the logical statements, and membership functions for the conclusions of the logical statements available to the microprocessor, the antecedent membership functions being expressed as degrees of belief of a measurable system parameter and the conclusion membership functions being represented as the moment and area of a membership function for a controllable system parameter;

means for recording a set of measured system parameters;

means within the fuzzy logic instruction set for evaluating each logical statement by determining the conjugate value of the antecedent membership functions of the logical statement, and multiplying the area of the conclusion membership function by the conjugate value to obtain a weighted area, and multiplying the moment of the conclusion membership function by the conjugate value to obtain a weighted moment;

means within the fuzzy logic instruction set for combining the conclusions of the logical statements to form a control signal by dividing the sum of the weighted moments for all logical statements by the sum of the weighted areas for all logical statements; and

means for providing the control signal to the controllable system function.

14. A computer that performs fuzzy logic control of a system which is capable of control by a centroid value of a mathematical summation of weighted conclusion membership functions of at least two logical statements, comprising:

a programmable digital microprocessor;

a dedicated fuzzy logic instruction set;

a set of logical statements, membership functions for the antecedents of the logical statements, and membership functions for the conclusions of the logical statements available to the microprocessor;

means for storing a set of measured system parameters;

means within the fuzzy logic instruction set for evaluating each logical statement;

means within the fuzzy logic instruction set for combining the conclusions of the logical statements responsive to the centroid of the sum of the conclusion membership functions to form a control signal; and

means for providing the control signal to the controllable system.

If (antecedent1) and     (antecedent2), then     (conclusion)

# Figure 1

Figure 2

Figure 3

**Figure 4**

EP 0 445 797 A2

Figure 5

From
Execution
Controller

Rs Rd

From
Execution
Controller

From
Execution
Controller

To
Status
/
Compare

From
Execution
Controller

| Register A-Address Decoder | Register B-Address Decoder | Register W-Address Decoder | W Selector Decoder | Flag Select Logic | ASB Selector Decoder |
|---|---|---|---|---|---|

156

154

158

160

150

152

To
Register
File

To
Register
File

To
Register
File

To
W-Selector

From
Add /
Subtract

From
Zero
Detect

A-Data
Selector
B-Data
Selector

EP 0 445 797 A2

## Figure 6

Figure 7

EP 0 445 797 A2

Figure 8

EP 0 445 797 A2

Figure 9

EP 0 445 797 A2

300

EXEC0

FZOP0

301

| Execution | Control |
|---|---|
| Cout, Null ← [Rd] - [Rs] | Load Cflag from Cout |

300'

| | |
|---|---|
| if Cflag = 0 then<br>    Rd ← [Rs]<br>else<br>    do nothing | KBDREG ← [KBDATA]<br>IR ← [KBDATA]<br>KBAREG ← [PC]+1<br>PC ← [PC]+1 |

301'

# Figure 10

302

EXEC0

FZOP0

303

| Execution | Control |
|-----------|---------|
| Cout, Null ← [Rd] - [Rs] | Load Cflag from Cout |

302'

| if Cflag = 1 then Rd ← [Rs] else    do nothing | KBDREG ← [KBDATA] IR ← [KBDATA] KBAREG ← [PC]+1 PC ← [PC]+1 |
|---|---|

303'

# Figure 11

| Execution | .trol |
|---|---|
| if OP=RHSH then<br>Rd.L ← Rd.L + Rs.L | KBD ← [KBDREG]<br>KBDREG ← [KBDATA]<br>KBAREG ← [PC] + 1<br>PC ← [PC] + 1 |

310'

| | |
|---|---|
| Rt.W1 ← KBD | KBD ← [KBDREG]<br>KBDREG ← [KBDATA]<br>KBAREG ← [PC] + 1<br>PC ← [PC] + 1 |

312'

| |
|---|
| Rt.W0 ← KBD |

314'

| |
|---|
| null ← Rt.L * Rs |

316'

| |
|---|
| Rt.L ← Rt.L * Rs |

318'

| | |
|---|---|
| Rd.L ← Rd.L + Rt.L | KBD ← [KBDREG]<br>KBDREG ← [KBDATA]<br>KBAREG ← [PC] + 1<br>PC ← [PC] + 1 |

320'

| | |
|---|---|
| Rt.W1 ← KBD | KBD ← [KBDREG]<br>KBDREG ← [KBDATA]<br>KBAREG ← [PC] + 1<br>PC ← [PC] + 1 |

322'

| |
|---|
| Rt.W0 ← KBD |

324'

| |
|---|
| null ← Rt.L * Rs |

326'

| |
|---|
| Rt.L ← Rt.L * Rs |

328'

| | |
|---|---|
| Rd+1.L ← Rd+1.L + Rt.L | KBAREG ← [PC] + 1<br>PC ← [PC] + 1<br>IR ← [KBDATA] |

330'

EXEC0 310

RHSH 312 RHSC

RIISC9

RIISC8 314

RIISC7 316

RIISC6 318

RIISC5 320

RHSC4 322

RIISC3 324

RHSC2 326

RIISC1 328

RIISC0 330

## Figure 12

32

| Execution | Control | |
|---|---|---|
| | KBDREG ← [KBDATA]<br>KBAREG ← [PC] + 1<br>PC ← [PC] + 1<br>INDEX ← [IR<7:0>] | 350' |
| | DLYKBD ← [KBDREG]<br>RAMAREG ← [KBDREG]<br>KBDREG ← [KBDATA]<br>INDEX ← [INDEX] - 1<br>RAM Read Cycle | 352' |
| INTFLAG ← FIRSTPASS | RAMAREG ← [DLYKBD]<br>KBDREG ← [KBDATA]<br>RAM Read Cycle<br><br>If INDEX <> 0 then<br>  KBAREG ← [PC] + 1<br>  PC ← [PC] + 1<br>  INDEX ← [INDEX] - 1 | 354' |
| | DLYKBD ← [KBDREG]<br>RAMAREG ← [KBDREG]<br>RAMINREG ← [RAMDATA]<br>KBDREG ← [KBDATA]<br>KBAREG ← [PC] + 1<br>PC ← [PC] + 1 | 356' |
| If INTFLAG = NEXTPASS then<br>Cout, null ← Rd - Rt | KBAREG ← [KBDREG] + ([RAMINREG] >> 2)<br>KBDREG ← [KBDATA]<br>INDEX ← [INDEX] - 1<br>RAMAREG ← [DLYKBD]<br>load Cflag from Cout<br>RAM Read Cycle<br><br>If RAMINREG<0> = 0 then<br>  SWAPKBD = FALSE<br>else<br>  SWAPKBD = TRUE | 358' |
| If INTFLAG = NEXTPASS<br>and If Cflag = 0 then<br>Rd ← Rt | DLYKBD ← [KBDREG]<br>KBDREG ← [KBDATA]<br>KBAREG ← [PC] + 1<br>PC ← [PC] + 1<br>RAMAREG ← [DLYKBD]<br>RAM Read Cycle | 360' |
| Rt ← KBD<br>INTFLAG ← NEXTPASS | KBDREG ← [KBDATA]<br>RAMAREG ← [DLYKBD]<br>RAMINREG ← [RAMDATA]<br>KBAREG ← [PC] + 1<br>PC ← [PC] + 1<br><br>If SWAPKBD then<br>  KBD ← high([KBDREG])<br>else<br>  KBD ← low ([KBDREG]) | 362' |
| If INTFLAG = NEXTPASS then<br>Cout, null ← Rd - Rt | KBAREG ← [KBDREG] + ([RAMINREG] >> 2)<br>KBDREG ← [KBDATA]<br>RAMAREG ← [DLYKBD]<br>load Cflag from Cout<br>RAM Read Cycle<br><br>If RAMINREG<0> = 0 then<br>  SWAPKBD = FALSE<br>else<br>  SWAPKBD = TRUE | 364' |
| If INTFLAG = NEXTPASS<br>and If Cflag = 0 then<br>Rd ← Rt | KBDREG ← [KBDATA]<br>KBAREG ← [PC] + 1<br>PC ← [PC] + 1<br>RAMAREG ← [DLYKBD]<br>RAM Read Cycle | 366' |

Figure 13

To Figure 13    From Figure 13

① ② ③

368 — LIISC4

370 — LIISC3

372 — LIISC2

374 — LIIS1C1

376 — LIIS1C0

378 — LIISXC2

380 — LIISC1

382 — LIISC0

384 — LIISCE0

| Execution | Control | |
|---|---|---|
| Rt ← KBD | KBDREG ← [KBDATA]<br>RAMAREG ← [DLYKBD]<br>RAMINREG ← [RAMDATA]<br>KBAREG ← [PC] + 1<br>PC ← [PC] + 1<br><br>If SWAPKBD then<br>  KBD ← high([KBDREG])<br>else<br>  KBD ← low([KBDREG]) | 368' |
| If INTFLAG = NEXTPASS then<br>Cout, null ← Rd - Rt | KBAREG ← [KBDREG] + ([RAMINREG] >> 2)<br>RAMAREG ← [DLYKBD]<br>load Cflag from Cout<br>If RAMINREG<0> = 0 then<br>  SWAPKBD = FALSE<br>else<br>  SWAPKBD = TRUE | 370' |
| If INTFLAG = NEXTPASS<br>and if Cflag = 0 then<br>Rd ← Rt | KBDREG ← [KBDATA] | 372' |
| | KBDREG ← [KBDATA]<br>RAMINREG ← [RAMDATA]<br>KBAREG ← [PC] + 1<br>PC ← [PC] + 1<br><br>If SWAPKBD then<br>  KBD ← high([KBDREG])<br>else<br>  KBD ← low([KBDREG]) | 374' |
| | KBAREG ← [KBDREG] + ([RAMINREG] >> 2)<br>If RAMINREG<0> = 0 then<br>  SWAPKBD = FALSE<br>else<br>  SWAPKBD = TRUE | 376' |
| | KBDREG ← [KBDATA] | 378' |
| Rt ← KBD | If SWAPKBD then<br>  KBD ← high([KBDREG])<br>else<br>  KBD ← low([KBDREG] | 380' |
| If INTFLAG = NEXTPASS then<br>Cout, null ← Rd - Rt | KBAREG ← [PC] + 1<br>KBDREG ← [KBDATA]<br>load Cflag from Cout | 382' |
| If INTFLAG = NEXTPASS<br>and if Cflag = 0 then<br>Rd ← Rt | IR ← [KBDATA]<br>KBDREG ← [KBDATA]<br>KBAREG ← [PC] + 1<br>PC ← [PC + 1] | 384' |

Figure 14

34

| Execution | Control | |
|---|---|---|
| DIVIDER ← Rs.L, Rd.L | Dflag ← "0" | 400' |
| QUOTIENT<7> | if [Rs+1] = 0 then<br>Dflag = 1 | 402' |
| QUOTIENT<6> | | 404' |
| QUOTIENT<5> | | 406' |
| QUOTIENT<4> | | 408' |
| QUOTIENT<3> | | 410' |
| QUOTIENT<2> | | 412' |
| QUOTIENT<1> | | 414' |
| QUOTIENT<0> | | 416' |
| Rd ← [QUOTIENT] | KBDREG ← [KBDATA]<br>KBAREG ← [PC] + 1<br>PC ← [PC] + 1<br>IR ← [KBDATA]<br>if [QUOTIENT] = 0 then<br>    Zflag = 1<br>else<br>    Zflag = 0 | 418' |

400 EXEC0

402 DIV8

404 DIV7

406 DIV6

408 DIV5

410 DIV4

412 DIV3

414 DIV2

416 DIV1

418 DIV0

## Figure 15

35